# EUROPÄISCHE PATENTSCHRIFT

(11) **EP 1 356 568 B1**
(45) Veröffentlichungstag und Bekanntmachung des Hinweises auf die Patenterteilung: **07.03.2007**
(21) Anmeldenummer: 02701207.9
(22) Anmeldetag: 18.01.2002
(51) Int. Cl.: H02J 4/00, H02J 13/00

(54) **SCHIFFS-ELEKTROSYSTEM**
ELECTRICAL SYSTEM FOR A SHIP
SYSTEME ELECTRIQUE POUR BATEAU

(30) Priorität: 01.02.2001 DE 10104892
(43) Veröffentlichungstag der Anmeldung: 29.10.2003
(73) Patentinhaber: SIEMENS AKTIENGESELLSCHAFT, 80333 München (DE)
(72) Erfinder: KALLBACH, Bernd, 22113 Oststeinbek (DE); WILLER, Hans-Peter, 21266 Jesteburg (DE); KAHLE, Jens, 22851 Norderstedt (DE)
(86) Internationale Anmeldenummer: PCT/DE2002/000151
(87) Internationale Veröffentlichungsnummer: WO 2002/061912

(56) Entgegenhaltungen:
- WO-A-96/08784
- WO-A-99/19956
- US-A- 4 682 294
- DEPPE M: "SIMATIC AND PROFIBUS-DP - THE IDEAL COMBINATION FOR DISTRIBUTED CONTROL" ENGINEERING AND AUTOMATION, SIEMENS AKTIENGESELLSCHAFT, BERLIN, DE, Bd. 18, Nr. 2, 1. März 1996 (1996-03-01), Seiten 15-17, XP000587885 ISSN: 0939-2068
- SELCH M ET AL: "STEP 7-THE FUTURE-ORIENTED PROGRAMMING SYSTEM FOR THE NEW SIMATIC PROGRAMMABLE CONTROLLERS" ENGINEERING AND AUTOMATION, SIEMENS AKTIENGESELLSCHAFT, BERLIN, DE, Bd. 16, Nr. 2, 1. März 1994 (1994-03-01), Seiten 5-6, XP000450160 ISSN: 0939-2068

## Beschreibung

Die Erfindung betrifft ein Schiffs-Elektrosystem mit Generatoren, elektrischen Verbrauchern, wie Elektromotoren und einem Bordnetz mit Schaltanlagen, etc. als Systemkomponenten, wobei das Elektrosystem bei allen Betriebszuständen des Schiffes für eine Bereitstellung ausreichender elektrischer Energie sorgt.

Bisher sind auf Schiffen analog arbeitende Mess-, Steuer- und Regelgeräte üblich, denen ggf. eine digitale Bedien- und Beobachtungsebene zugeordnet ist. Ein derartiges Mischsystem hat sich zwar bewährt hat aber aufbautechnische Nachteile. Überraschenderweise hat sich herausgestellt, dass eine volldigitalisierte Ausführung vorteilhafter und insbesondere kostengünstiger sein kann. Dies gilt insbesondere, wenn eine fortlaufende Optimierung durch Neuparametrierung, also durch äußere Eingriffe, oder durch eine Automatik vorgenommen werden soll.

Druckschrift US-A-4 682 294 offenbart ein Schiffs-Elektrosystem gemäß dem Oberbegriff des Anspruchs 1. Die Steuerung und Regelung über die digital arbeitenden Standardmodule erfolgt hierbei nach erfolgtem Start und bis zu Beginn einer Abschaltphase der Systemkomponenten. Während der Start- oder Abschaltphase der Systemkomponenten erfolgt die Steuerung und Regelung der Systemkomponenten über eine zentrale Steuereinheit; als zentrale Steuereinheit ist hierbei allerdings kein digital arbeitendes Standardmodul, sondern ein spezielles zentrales Steuergerät vorgesehen. Weiterhin werden in bekannten Fall während der Start- und der Abschaltphase sämtliche Systemkomponenten über eine einzige gemeinsame Steuereinheit und somit nicht mit Hilfe einzelner digital arbeitender Standardmodule gesteuert und geregelt. Ein Ausfall der sämtliche Systemkomponenten steuernden Zentraleinheit führt somit zu einem Ausfall sämtlicher Systemkomponenten.

Erfindungsgemäß werden die Systemkomponenten bei allen Betriebszuständen durch digitalarbeitende Standardmodule gesteuert und geregelt, wobei jedes der Standardmodule jeweils nur zur Steuerung und Regelung jeweils einer der Systemkomponenten vorgesehen ist.

Die Ausbildung des Systems ist aus der beigefügten Systembeschreibung mit den in dieser enthaltenen Bildern in allen Einzelheiten entnehmbar. Weitere erfinderische Einzelheiten ergeben sich aus den Unteransprüchen.

### 1 Allgemein

Aufgabe eines Powermanagement Systems

Wesentliche Aufgabe des Powermanagement Systems SIMOS PMA 71 ist es, bei allen Betriebszuständen des Schiffes für eine Bereitstellung ausreichender elektrischer Energie zu sorgen.

Bei zunehmendem Leistungsbedarf auf Schiffen wird jedoch der wirtschaftlichen Energieerzeugung ein fast ebenso hoher Rang eingeräumt wie der Unterbrechungsfreiheit

Die Energieerzeugerautomatik SIMOS PMA 71 hat die Veranlagung elektrische Energie automatisch während der verschiedenen Betriebsarten aufrechtzuerhalten.

Bei Störungen im Bordnetz werden alle notwendigen Maßnahmen veranlasst, um die Verbraucher möglichst unterbrechungsfrei mit elektrischer Energie zu versorgen und gleichzeitig Schäden zu verhüten.

Für jedes Aggregat werden SIMATIC-S7 Standardkomponenten verwendet, ergänzt durch ein Generatorschutzgerät/Messumformer und einen OC 24V/DC 24V-Trennwandler.

Generatorschutzgerät/Messumformer, DC 24V/DC 24V-Trennwandler und SIMATIC S7 jeder einzelnen Aggregatsteuerung bilden ein unabhängiges System. Damit ist gewährleistet, dass bei Ausfall eines Systems auch nur ein Aggregat betroffen ist.

Das Generatorschutzgerät verfügt neben der 24V-Einspeisung von der Schiffsbatterie über eine interne Spannungsversorgung aus der Generatorspannung. Soll die SIMATIC-S7 ebenfalls durch eine redundante Stromversorgung versorgt werden, ist diese von Seiten des Schaltanlagenherstellers vorzusehen (z.B. Netzteil DC 24V, gespeist von der Sammelschienenspannung), damit auch bei Ausfall der übergeordneten Batteriestromversorgung die Funktion der PMA sichergestellt ist.

Das Generatorschutzgerät kann auch allein, ohne SIMATIC-S7, eingesetzt werden und realisiert dann nur einen Teil der Funktionen (Generatorschutz, Synchronisierung). Außer der Generator-PMA ist eine Kuppelschalter-PMA, eine Landanschluss-PMA und eine Notdiesel-PMA lieferbar. Diese haben besondere, von der Generator-PMA abweichende, Funktionen.

Einige Klassifikationsgesellschaften fordern ein zusätzliches, unabhängiges Diesel-Schutzsystem (Überdrehzahl, Schmieröldruck). Der PMA 71 Dieselschutz hat nur zweitrangige Funktionen. Der Hauptdieselschutz ist nicht Teil der PMA 71.

### 2 Leistung und Funktionsumfang

- Bordnetzüberwachung (Black-out, Unterfrequenz, Überfrequenz, Unterspannung, Überspannung)
- Lastabhängiges Starten von Aggregaten (Überstrom, Überlast)
- Störungsabhängiges Starten von Aggregaten
- Überstrom- und Rückleistungsschutz des Generators
- Abschaltung von unwichtigen Verbrauchern in 3 Stufen
- Automatisches Stoppen von Aggregaten unter Berücksichtigung der zur Verfügung stehenden Leistung (Unterlast)
- Manuelles Starten von Aggregaten (mit mehreren Startversuchen, sofern eingestellt), sowie manuelles Stoppen (mit vorheriger Entlastung des Aggregates, sofern noch ein weiteres Aggregat auf Sammelschiene ist)
- Automatisches Zusynchronisieren von Aggregaten
- Automatische Regelung der Bordnetzfrequenz
- Automatischer Wirklastabgleich zwischen den Aggregaten
- Kurzschlussschutz
- Störungsanzeige integriert im Bedientableau
- Lastanforderungsautomatik (Option)

### 2.1 Besondere Merkmale

- Hohe Verfügbarkeit durch den strukturierten Aufbau (Störung einer PMA 71 beeinflusst nicht den Betrieb der anderen Aggregate)
- Einfache Wartung und Fehlersuche durch den modularen Aufbau
- Leuchtdioden an allen binären SIMATIC-S7 Ein- und Ausgängen
- Leichtes Tauschen der Baugruppen in der SIMATIC-S7 durch Stecktechnik
- Leichtes Anpassen des Systems an verschiedene Aggregate durch das Generatorschutzgerät/Messumformer
- Wenig Verdrahtungsaufwand durch vorgefertigte Stecktechnik

### 2.2 Allgemeiner Hinweis:

Betriebs- und Störungsmeldungen werden am Bedientableau in Form von Text angezeigt.

Entsprechend dem Platz in der Anzeige des Bedientableaus können Abkürzungen notwendig werden.

Die Art der Meldung (Betriebs- oder Störmeldung) wird in dieser Beschreibung in Kurzform mit
BM (Betriebsmeldung)
SM (Störungsmeldung)
abgekürzt.

Folgende Abkürzungen werden verwendet
- DG: (Dieselgenerator)
- WG: (Wellengenerator)
- HATA: (Hauptschalttafel)
- B&B: (Bedienen und Beobachten)

### 3 Anlagenaufbau

### 3.1 Komponenten Einzelaggregat

Die Komponenten der Energieerzeugerautomatik SIMOS PMA 71 sind für den dezentralen Aufbau in Standardschalttafeln (Zuordnung zum Generatorfeld) oder für den zentralen Aufbau in Standardschränken vorgesehen. Beim zentralen Aufbau ist das Generatorschutzgerät im jeweiligen Generatorfeld einzubauen, während die übrigen Komponenten zentral in einem Schrank zusammen eingebaut werden können.

Jedem Aggregat sind folgende Komponenten standardmäßig zugeordnet:
- Speicherprogrammierbare Steuerung (SPS, SIMATIC S7-300)
- Generatorschutz-/Synchronisiergerät/Messumformer (GENOP 71).
- Trennwandler DC 24V/DC 24V
- Bedientableau (OP)

Wird die PMA in einem Zentralschrank aufgebaut, so ist das Generatorschutzgerät GENOP 71 in das entsprechende Generatorfeld in der Hauptschalttafel einzubauen. Die weiteren Komponenten können im Zentralschrank eingebaut werden.

### 3.2 Steckverbindungen/Anschlüsse

### Buskopplungen

Die Komponenten eines Aggregats (SPS, GENOP 71, OP) werden Ober Profibus DP miteinander verbunden.

Die SPS verschiedener Aggregate werden über MPI-Kopplung verbunden.

### Peripherie

Die externen Leitungen werden über Anschlussmodule (mit Schraubanschlüssen) angeschlossen. Die Module für Digitalausgabesignale sind mit Relais bestückt. (Potentialtrennung der Ausgangssignale)

Diese Anschlussmodule werden mit den Ein- und Ausgabebaugruppen der SIMATIC-S7 über Frontstecker und Steckleitungen verbunden.

### Generatorschutzgerät/Messumformer

Dem Generatorschutzgerät/Messumformer sind folgende Signale zuzuführen:
- Generatorspannung 3-phasig, (Signal 100V~)
- Netzspannung 3-phasig, (Signal 100V~)
- Je Phase ein Stromwandler (Signal 1A~)

Diese Leitungen sind bei der Verlegung innerhalb eines Schrankes bzw. einer Schalttafel getrennt von den Steuerleitungen zu führen (separater Kabelkanal).

### Schirmung der Leitungen

Bei der Verlegung der Signal- bzw. der Versorgungsleitungen außerhalb von Schrank/Schalttafel sollte zu Leitungen, die eine Spannung > 230 V führen, ein Mindestabstand von 10 cm eingehalten werden.

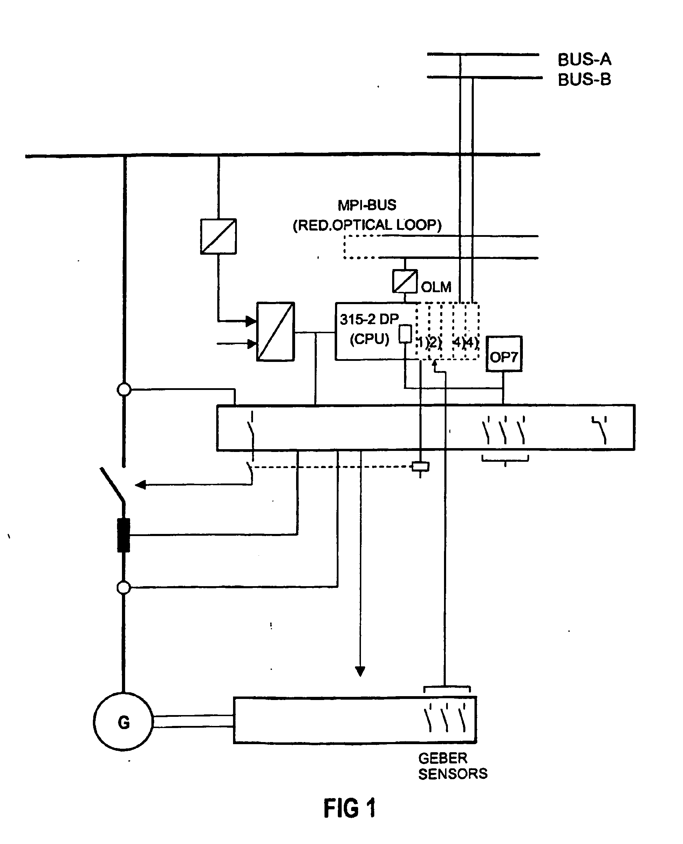

### 3.3 In Fig 1 ist die System Konfiguration dargestellt

### 4 Aggregatesteuerung

Die folgenden Betriebsarten sind möglich:
- Local Hand
- Local Semiautomatik
- Automatikbetrieb

### 4.1 Funktion im "Local Hand" Betrieb

Der Local Hand Betrieb wird normalerweise für Wartungsarbeiten und zum Starten und Stoppen des Aggregates von "Vor Ort" angewählt.
in dieser Betriebsart wird das Aggregat unter Umgehung der PMA 71 gestartet und gestoppt.

Zur Umschaltung wird der Wahlschalter Hand/Automatik in die Stellung "Hand" geschaltet.

Die Betriebsart wird als "HAND" am Bedientableau angezeigt.

Der Wahlschalter "Hand/Automatik" ist in der HATA angeordnet

Im Local Hand Betrieb sind die Automatikfunktionen sowie die Bedienung über das Bedientableau gesperrt. Die Anzeigefunktionen sind in Betrieb.

Drehzahlverstellungen sowie das Einschalten des Generatorschalters kann nur von Hand vorgenommen werden. (Die erforderlichen Geräte für Drehzahlverstellung und die Bedienung des Generatorschalters sind vom Schalttafelhersteller zu liefern.)

Die Sicherheitsfunktionen(Abschaltung im Falle von Überdrehzahl, Schmieröldruck min., Kühlwassertemperatur max. usw. sind weiterhin in Funktion.

Wenn der Generatorschalter eingeschaltet ist, ist auch der Generatorschutz in Funktion.

### 4.1.1 Synchronisierung

Die Handsynchronisierung wir mit Hilfe einer Check-Synchronisierhilfe durchgeführt. Nachdem das Aggregat von Hand gestartet wurde, wird die Generatorfrequenz durch Handverstellung an die Netzfrequenz angeglichen (von der Schalttafel aus). Zum Einschalten des Generatorschalters ist die "FREIGABETASTE" zu drücken. Mit dem nächsten Nulldurchgang wird der Schalter durch die Synchronisierhilfe eingeschaltet. Im Falle eines Blackouts" kann der Generatorschalter direkt mit der Taste "SCHALTER EIN" eingeschaltet werden.

### 4.2 Funktion im "Local Semiautomatikbetrieb"

Vorbedingung: Der Wahlschalter "Hand/Automatik" steht auf "Automatik". Auf Local Semiautomatik wird durch drücken der Taste "SEMI" am Bedientableau umgeschaltet. Die Betriebsart wird als "SEMI" am Bedientableau angezeigt. Folgende Funktionen können im Semiautomatikbetrieb vom Bedientableau ausgeführt werden:
- Starten des Aggregates
- Stoppen des Aggregates
- Starten der Synchronisierung

Um Fehlbedienungen zu vermeiden ist für wichtige Funktionen eine zusätzliche Bestätigung mit der "BESTÄTIGEN" Taste erforderlich.

Die Sicherheitsfunktionen(Abschaltung im Falle von Überdrehzahl, Schmieröldruck min., Kühlwassertemperatur max. sowie der Generatorschutz sind in Funktion. Im Falle eines Fehlers wird das Dieselaggregat wie im Automatikbetrieb gestoppt, jedoch erfolgt kein Startbefehl an das Standby Aggregat.

### 4.2.1 Starten des Aggregates

Bei Betätigung der Taste "START" wird die Meldung "BESTÄTIGEN DRÜCKEN" für eine einstellbare Zeit am Bedientableau angezeigt. Der Befehl wird jedoch erst ausgeführt, wenn innerhalb dieser Zeit die Übernahmetaste "BESTÄTIGEN" betätigt wird. Ist dies nicht der Fall, wird die Anforderung zurückgenommen.

Der Anlassbefehl kann nur gegeben werden, wenn der Motor steht, d.h. keine Zünddrehzahl und Generatorspannung vorhanden sind. Wird die "BESTÄTIGEN" Taste während des Zeitablaufs betätigt, wird der Startbefehl gegeben. Zur gleichen Zeit erscheint die BM "STARTVENTIL" am Display. Mit dem Signal "Zünddrehzahl erreicht" oder "Generatorspannung>85%" wird der Startbefehl aufgehoben. Der Startbefehl wird nur für eine einstellbare Zeit gegeben (Startzeit).

Mit dem Signal "Zünddrehzahl" oder "Generatorspannung>85%" wird die BM "BETRIEB" angezeigt.
Wird das Signal "Zünddrehzahl" oder "Generatorspannung >85%" nach mehreren Startversuchen nicht erreicht, so wird ein weiterer Startbefehl ausgegeben.

### 4.2.2 Starten der Synchronisierung

Die Synchronisierung kann auf zwei verschiedenen Wegen ausgeführt werden:
- ohne Lastverteilung nach der Synchronisierung
- mit Lastverteilung nach der Synchronisierung

### Synchronisierung ohne Lastverteilung

Bei Betätigung der Taste "GEN.SCHALTER EIN" wird die Meldung "BESTÄTIGEN DRÜCKEN" für eine einstellbare Zeit am Bedientableau angezeigt. Der Befehl wird jedoch erst ausgeführt, wenn innerhalb dieser Zeit die Übernahmetaste "BESTÄTIGEN" betätigt wird. Ist dies nicht der Fall, wird die Anforderung zurückgenommen .

Jetzt wird die automatische Synchronisierung gestartet und der Generatorschalter eingeschaltet. Am Bedientableau wird jetzt die aktuelle Betriebsart und die abgegebene Wirkleistung des Aggregates angezeigt. Es erfolgt keine automatische Lastverteilung. Änderungen der Lastverteilung können von Hand durchgeführt werden.

### Synchronisierung mit Lastverteilung

Diese Funktion ist nur im Automatikbetrieb möglich. Durch Betätigung der Taste "AUTO" wird auf AUTO umgeschaltet. Nach der Umschaltung wird die automatische Synchronisierung gestartet und der Generatorschalter eingeschaltet. Nach dem Einschalten beginnt der automatische Lastabgleich.

### Einschalten des Generatorschalters bei blackout

Im Falle von blackout wird der Generatorschalter wie folgt eingeschaltet:
- durch drücken der Taste "GEN.Schalter EIN" und "BESTÄTIGEN" oder
- durch Umschaltung auf Automatik

### 4.2.3 Stoppen des Aggregates

Bei Betätigung der Taste "STOP" wird die Meldung "BESTÄTIGEN DRÜCKEN" für eine einstellbare Zeit am Bedientableau angezeigt. Der Befehl wird jedoch erst ausgeführt, wenn innerhalb dieser Zeit die Übernahmetaste "BESTÄTIGEN" betätigt wird. Ist dies nicht der Fall, wird die Anforderung zurückgenommen.

Im Parallelbetrieb wird zunächst ein "Stop mit Lastrücknahme" durchgeführt. Die BM "LAST RED" wird angezeigt. Es werden "Tiefer" Verstellimpulse ausgegeben bis das Aggregat unter dem Grenzwert "Gen Leistung Minimum" entlastet ist Danach wird der Generatorschalter ausgeschaltet Mit dem Ausschalten des Generatorschalters läuft das Aggregat noch eine Zeit lang zur Kühlung nach. Am Bedientableau wird die Meldung "LEERLASTNACHLAUF" angezeigt. Nach Ablauf der Leerlastnachlaufzeit wird das Aggregat gestoppt. Mit Ausgabe des Stoppkommandos wechselt die BM von "LEERLASTNACHLAUF" nach "STOP". Nach Beendigung des Stop-Befehls ist das Aggregat wieder startbereit.

Der "LEERLASTNACHLAUF" kann abgeschaltet werden (Festlegung erfolgt bei der Projektierung). In diesem Falle wird das Aggregat nach dem Ausschalten des Generatorschalters sofort gestoppt.

### 4.2.4 Ausschalten des Generatorschalters

Bei Betätigung der Taste "GEN.SCHALTER AUS" wird die Meldung "BESTÄTIGEN DRÜCKEN" für eine einstellbare Zeit am Bedientableau angezeigt. Der Befehl wird jedoch erst ausgeführt, wenn innerhalb dieser Zeit die Übernahmetaste "BESTÄTIGEN" betätigt wird. Ist dies nicht der Fall, wird die Anforderung zurückgenommen. Im Parallelbetrieb wird zunächst ein "Stop mit Lastrücknahme" durchgeführt. Die BM "LAST RED" wird angezeigt. Es werden "Tiefer" Verstellimpulse ausgegeben bis das Aggregat unter dem Grenzwert "Gen Leistung Minimum" entlastet ist. Danach wird der Generatorschalter ausgeschaltet.

### 4.3 Funktion im "Automatikbetrieb

Auf Automatik wird durch drücken der Taste "AUTO" am Bedientableau umgeschaltet. Die Betriebsart wird als "AUTO" am Bedientableau angezeigt.

Im Automatikbetrieb erfolgt das Starten (Standby start) und Stoppen (Notstopp, Unterbelastung usw.) automatisch oder auf Anforderung über ein Bedien und Beobachtungssystem.

### 4.3.1 Start im Automatikbetrieb

Im Automatikbetrieb wird der Startvorgang eingeleitet, wenn das Aggregat auf "Standby" steht und eine Anforderung von einem anderen Aggregat oder vom übergeordneten Bediensystem erfolgt. '

Die BM "START" erscheint am Display.

Mit dem Signal "Zünddrehzahl erreicht" oder "Generatorspannung>85%" wird der Startbefehl aufgehoben. Der Startbefehl wird nur für eine einstellbare Zeit gegeben (Startzeit).

Mit dem Signal "Zünddrehzahl" wird die BM "BETRIEB" angezeigt.

Wird das Signal "Zünddrehzahl" oder "Generatorspannung >85%" nach mehreren Startversuchen nicht erreicht, so wird ein weiterer Startbefehl ausgegeben.

### 4.3.2 Stoppen im Automatikbetrieb

Mit einem unverzögerten Stopbefehl (Notstopp, Kurzschluss, Rückleistung usw.) wird der Generatorschalter sofort ausgeschaltet.

Wird das Aggregat über Unterbelastung oder durch Fernstopp über B&B gestoppt und es befindet sich im Parallelbetrieb, so wird zunächst ein "Stop mit Lastrücknahme" durchgeführt.

Die BM "LAST RED" wird angezeigt. Es werden "Tiefer" Verstellimpulse ausgegeben bis das Aggregat unter dem Grenzwert "Gen Leistung Minimum" entlastet ist Danach wird der Generatorschalter ausgeschaltet. Mit dem Ausschalten des Generatorschalters läuft das Aggregat noch eine Zeit lang zur Kühlung nach. Am Bedientableau wird die Meldung "LEERLASTNACHLAUF" angezeigt. Nach Ablauf der Leerlastnachlaufzeit wird das Aggregat gestoppt. Mit Ausgabe des Stoppkommandos wechselt die BM von "LEERLASTNACHLAUF" nach "STOP". Nach Beendigung des Stop-Befehls ist das Aggregat wieder startbereit.

Der "LEERLASTNACHLAUF" kann abgeschaltet werden (Festlegung erfolgt bei der Projektierung). In diesem Falle wird das Aggregat nach dem Ausschalten des Generatorschalters sofort gestoppt.

### 4.4 Startfehler

Der Startvorgang mit einem oder mehreren Startversuchen ist im Automatik- und Semiautomatikmode gleich.

Wird das Signal "Zünddrehzahl" oder "Generatorspannung >85%" nach mehreren Startversuchen nicht erreicht, so wird ein Stoppbefehl ausgegeben. Die folgenden Meldungen werden ausgegeben:
- "BLOCKIERT' (BM)
- "STARTFEHLER" (SM)

Im Automatikbetrieb wird ein Zusetzbefehl ausgegeben. Nach dem Verschwinden des "STOP"-Befehls kann die Störungsmeldung quittiert werden und das Aggregat ist wieder startbereit. Das Rücksetzen ist nicht möglich im Automatikbetrieb.

### 4.5 Justierung der Start- und Stoppzeit

Die Startzeit, die Pausenzeit zwischen den Startversuchen und die Stoppzeit muss entsprechend den Anforderungen des Aggregates justiert werden. Es werden im Automatik- und Semiautomatikmode die gleichen Zeitwerte eingestellt. Die Einstellung wird vom Bedientableau aus vorgenommen.

Die Anzahl der Startversuche kann auch eingestellt werden.

Standardeinsteilungen:
- Startzeit 5 s
- Pausenzeit 5 s
- Stoppzeit 30 s
- Anzahl der Startversuche 3

### 4.6 Leerlastnachlauf

Für einige Aggregatetypen ist ein Leerlastnachlauf zu empfehlen um das Aggregat vor dem Stoppen abzukühlen. Der Leerlastnachlauf kann von der PMA 71 gesteuert werden. Am Bedientableau kann eingestellt werden wie lange der Leerfastnachlauf durchgeführt wird. Der Leerlastnachlauf ist im Local Semiautomatikmode und im Automatikbetrieb aktiv. Die BM "LEERLASTNACHLAUF" wird während dieser Zeit angezeigt.

### 4.7 Blockieren vom Bedientableau

Vorbedingung:
- Local Semiautomatikmode
- Aggregat steht

Das Blockieren des Aggregates ist für Wartungsarbeiten vorgesehen. Bei Betätigung der Taste "ENTER" wird das Bedienmenü aufgeblendet. Mit der Pfeiltaste das Untermenü "EINGABE KOMMANDOS" anwählen und im Feld "Aggregat Blockieren" eine "1" eintragen und mit "ENTER" bestätigen. Mit der "ESC" Taste ins Anzeigefeld zurückspringen. Die folgende SM wird angezeigt: ,

### "BLOCKIERUNG VOM BEDIENTABLEAU"

### Blockierung rücksetzen

Erneut das Untermenü anwählen. Statt der "1" jetzt eine "0" eintragen und mit "ENTER" bestätigen. Die Funktion ist damit zurückgesetzt.

### 4.8 Sperren über Sperrschalter

An den meisten Dieselaggregaten ist ein "BLOCKED/LOCAL/REMOTE" Wahlschalter angebracht der bei Servicearbeiten umgeschaltet werden kann. Der Wahlschalter muss zur PMA 71 geschaltet werden. Die Stellungen "BLOCKED/LOCAL" blockieren jede Startmöglichkeit durch die PMA 71. Am Bedientableau wird je nach Wahlschalterstellung entweder "BLOCKED" oder "LOCAL" angezeigt.

Das laufende Aggregat wird jedoch nicht abgestellt. Die Überwachung des Aggregates (Überdrehzahl, Schmieröldruck, usw.) bleibt weiterhin wirksam. Wird ein Startversuch im Local Semiautomatikmode vorgenommen, so erscheint folgende Meldung am Bedientableau:

### - "AGGREGAT ÜBER SPERRSCHALTER BLOCKIERT"

### 4.9 Quittierung von Alarmmeldungen

Alarmmeldungen werden am Bedientableau in den unteren beiden Meldezeilen blinkend dargestellt. Mit der Taste "ACK" können sie quittiert werden. Ist die Alarmmeldung (z.B. Überspannung) bereits gegangen, so wird sie bei Betätigung der "ACK" Taste aus dem Meldepuffer gelöscht Steht die Meldung extern weiterhin an, so wechselt sie bei Quittierung von Blinklicht in Dauerlicht und wird am Display weiterhin angezeigt. Verschwindet die Meldung extern, so wird sie auch im Meldepuffer gelöscht und am Display nicht mehr angezeigt.

Anstehende bereits quittierte Meldungen können mit den Tasten ↑↓ angezeigt werden.

### 4.10 Rücksetzen von Blockierungen

Blockierungen des Aggregates (z.B. ausgelöst durch Oberdrehzahl oder Kurzschluss auf der Sammelschiene usw.) werden durch die Betriebsmeldung "BLOCKIERT" am Bedientableau angezeigt und müssen durch Betätigung der Taste "BESTÄTIGEN" rückgesetzt werden. Das Rücksetzen ist nur möglich, wenn das Aggregat steht

### 4.11 Vorschmierung

Die PMA 71 stellt einen Ausgang (Potentialfreien Kontakt) zur Steuerung der Vorschmierung zur Verfügung: Am Bedientableau können folgende Funktionen eingestellt werden.
- Keine Vorschmierung
- Dauervorschmierung
- Zyklische Vorschmierung
- Vorschmierung vor Start

Zusätzlich kann eingestellt werden, ob die Vorschmierung in Stand-by, in Automatik oder in Automatik und im Local Semiautomatikmode stattfinden soll.

### 4.11.1 Dauervorschmierung

Bei Vorwahl dieser Funktion wird das Aggregat dauernd vorgeschmiert so lange es nicht läuft.

Die Vorschmierung wird gestartet, wenn die Signale "Zünddrehzahl" und "Generatorspannung >85%" verschwunden sind. Die Vorschmierung endet, wenn die Signale "Zünddrehzahl" oder "Generatorspannung >85%" kommen.

Ist der Sperrschalter am Aggregat eingelegt, so ist die Vorschmierung ausgeschaltet.

### 4.11.2 Zyklische Vorschmierung

Bei Vorwahl dieser Funktion wird das Aggregat zyklisch vorgeschmiert so lange es nicht läuft.

Die Zeiten können am Bedientableau eingestellt werden.

Standardeinstellungen:
- Vorschmierzeit 2 min
- Pausenzeit 2 hours

Die Vorschmierung wird gestartet, wenn die Signale "Zünddrehzahl" und "Generatorspannung >85%" verschwunden sind. Die Vorschmierung endet, wenn die Signale "Zünddrehzahl" oder "Generatorspannung >85%" kommen.

Ist der Sperrschalter am Aggregat eingelegt, so ist die Vorschmierung ausgeschaltet.

### 4.11.3 Vorschmierung vor Start

Mit dieser Funktion wird das Aggregat für eine einstellbare Zeit vorgeschmiert und dann gestartet.

Es wird jedoch überprüft, welche Zeit seit der letzten Vorschmierung vergangen ist. Ist die Zeit zu lang, wird vorgeschmiert. Ist die Zeit kürzer als eingestellt, wird sofort gestartet

Die Zeiten können am Bedientableau eingestellt werden.

Standardeinstellungen:
- Vorschmierzeit 30 s
- Längste Zeit für Start ohne 5 min Vorschmierung

Im Falle von,"Blackout" wird der Start ohne Vorschmierung durchgeführt.

### 4.11.4 Vorschmierüberwachung (Option)

Für diese Funktion ist ein Kontakt von einem externen Vorschmiersystem erforderlich. Der Alarm wird verzögert ausgewertet. Nach Ablauf der Verzögerungszeit wird das Aggregat blockiert. Die Verzögerungszeit kann am Bedientableau eingestellt werden.

Die folgenden Meldungen werden am Bedientableau ausgegeben:
- "BLOCKIERT" (BM)
- "FEHLER SCHMIERÖLDRUCK" (SM)

Die Blockierung ist im Automatik und Local Semiautomatikmode aktiv. Normalerweise ist ein Reset nicht möglich solange der Alarm aktiv ist.

Im Falle von "Blackout" wird der Alarm unterdrückt.

### 4.12 Vorheizen

Die PMA 71 stellt einen Ausgang (Potentialfreien Kontakt) zur Steuerung der Vorheizung zur Verfügung.

Es kann eingestellt werden, ob die Vorschmierung in Standby, in Automatik oder in Automatik und im Local Semiautomatikmode stattfinden soll.

Das Vorheizen wird gestartet, wenn die Signale "Zünddrehzahl" und "Generatorspannung >85%" verschwunden sind. Die Vorheizung endet, wenn die Signale "Zünddrehzahl" oder "Generatorspannung >85%" kommen.

Ist der Sperrschalter am Aggregat eingelegt, so ist die Vorheizung ausgeschaltet.

### 4.13 Slow Turn (Option)

Mit dieser Funktion wird die Kurbelwelle des Dieselaggregates langsam durchgedreht und dann gestartet.

Es wird jedoch überprüft, welche Zeit seit dem letzten Lauf des Aggregates vergangen ist. Ist die Zeit zu lang, wird vorgeturnt. Ist die Zeit kürzer als eingestellt, wird sofort gestartet

Die Zeit kann am Bedientableau eingestellt werden.

Standardeinstellung:
- Zeit für slow turn 10 s
- Längste Zeit für Start ohne 2 Std. slow turn

Im Falle von "Blackout" wird der Start ohne slow turn durchgeführt.

### 4.14 Signal "Zünddrehzahl"

Für verschiedene Funktionen benötigt die PMA 71 das Signal "Zünddrehzahl" (Zünddrehzahl = Kontakt geschlossen).

Die Drehzahlerfassung (z.B. ein Drehzahlrelais) ist nicht Teil der PMA 71.

### 4.15 Sicherheitsfunktionen

Mit der PMA71 können Sicherheitsfunktionen realisiert werden. Vier digitale Eingänge mit Drahtbruchüberwachung können.im Standard genutzt werden. Normalerweise werden sie wie folgt belegt:
- No. 1: "Überdrehzahl"
- No. 2: "Schmieröldruck min."
- No. 3: "Kühlwassertemperatur max."
- No. 4: Reserve (zum Beispiel "Kühlwasserdruck min.")

Weitere Eingänge können optionel zur Verfügung gestellt werden.

Das Aggregat muss mit den entsprechenden Gebern ausgerüstet sein. Zur Drahtbruchüberwachung wird jeder Geberkontakt mit einem 5,6 Kiloohm Widerstand überbrückt. Die PMA71 erkennt den Widerstand wie folgt:

| | | |
|---|---|---|
| Widerstand ~ 8 kΩ | (Drahtbruch oder kein Widerstand parallel): | Drahtbruch |
| Widerstand ~ 5.6 kΩ | (Kontakt offen mit Widerstand parallel): | Kein Stopp |
| Widerstand ~ 0 | (Kontakt geschlossen): | Unverzögert Stopp |

Die Alarme 2...4 sind - um eine Auslösung durch kurze Störimpulse zu vermeiden - mit einer Verzögerungszeit versehen. Diese Zeit ist vom Bedientableau aus einstellbar. Die Standardeinstellung ist eine Sekunde.

Wenn einer dieser Alarme kommt, wird das Aggregat sofort gestoppt und blockiert. Im Automatikbetrieb wird ein Standby Aggregat gestartet.

Die folgenden Meldungen werden am Bedientableau angezeigt:
- "BLOCKIERT" (BM)
und die entsprechende Ursachenmeldung:
- "ÜBERDREHZAHL" (SM) oder
- "SCHMIERÖLDRUCK MIN" (SM) oder
- "KÜHLWASSERTEMP HIGH." (SM) oder
- "ALARM NO.4" (SM)

### 4.15.1 Unverzögert Stop/Verzögert Stop

Die Sicherheitsabschaltung kann verzögert oder unverzögert erfolgen. Das Kriterium Kühlwassertemperatur Max. z.B. erfordert je nach Aggregatetyp entweder eine unverzögerte oder eine verzögerte Abschaltung (Festlegung erfolgt bei der Projektierüng). Ist eine verzögerte Abschaltung vorgesehen, so wird bei Überschreitung der Kühlwassertemperatur zunächst die BM "VERZÖGERT STOP" am Bedientableau ausgegeben. Nach Ablauf einer Verzögerungszeit wird das Aggregat dann gestoppt. Funktion siehe 4.15.

Die Verzögerungszeit ist am Bedientableau einstellbar.

### 4.16 Drehzahl/Zeitabhängige Freigabe der Alarme

Wenn das Aggregat nicht läuft, sind einige Werte (z.B. Schmieröldruck) unter dem Alarmpunkt. Nach dem Start des Aggregates benötigen diese Werte einige Zeit um ein normales Niveau zu erreichen.

Deswegen können die Alarme blockiert werden, bis eine Verzögerungszeit abgelaufen ist. (Verzögerungszeit 1 oder Verzögerungszeit 2).

Alarm No.2 (Schmieröldruck) ist blockiert bis Verzögerungszeit 1 abgelaufen ist.

Standardeinstellungen:
- Überwachungszeit 1 15 s
- Überwachungszeit 2 45 s

Überwachungszeit 1 wird mit den Signalen "Zünddrehzahl" oder "Generatorspannung >85%" gestartet..

Nachdem diese Zeit abgelaufen ist wird die Überwachungszeit 2 gestartet.

### 4.17 Alarmblockierung

Zur Alarmblockierung steht ein potentialfreier Kontakt zur Verfügung. Dieser Ausgang ist aktiv, wenn das Aggregat nicht läuft und nach dem Start des Aggregates bis die Überwachungszeit 1 abgelaufen ist.

Mit diesem Signal ist es möglich Alarme eines externen Alarmsystems im Stillstand oder während des Aggregatehochlaufs zu blockieren.

### 4.18 Notstop

Für die Funktion Notstop ist ein digitaler Eingang vorgesehen. Hier kann ein "Notstop" Drucktaster angeschlossen werden. Diese Funktion löst ein sofortiges stop und die Blockierung des Aggregates aus. Die Funktion wirkt im Automatik und im Local Semiautomatikmode, aber nur wenn das Aggregat läuft, z.B. wenn die Signale "Zünddrehzahl" oder "Generatorspannung>85%" anliegen

Die folgenden Meldungen werden am Bedientableau angezeigt:
- "BLOCKIERT" (BM)
- "NOTSTOP" (SM)

Die Funktion "Notstop" löst keinen Standby Start aus. Es ist zu beachten, das ein Notstop eines Aggregates einen "Blackout".verursachen kann wenn das entsprechende Aggregat allein am Netz ist, oder wenn das verbleibende Aggregat überlastet ist

Aus Sicherheitsgründen sollte das Notstop Ventil unter Umgehung der PMA 71 zusätzlich direkt angesteuert werden.

### 4.19 Notstopventil

Einige Aggregate haben neben dem normalen Stop Ventil zusätzlich ein Notstopventil. Dieses Ventil wird angesteuert wenn das Aggregat so schnell wie möglich gestoppt werden soll. (Unverzögert Stop, Notstop, Kurzschluss usw.)

Die PMA71 stellt einen Ausgang für die Ansteuerung dieses Ventils zur Verfügung.

### 4.20 Unterdrilckungsventil

Die PMA71 stellt einen Ausgang für die Ansteuerung eines Unterdrückungsventils zur Verfügung. Dieses Ventil wird angesteuert wenn das Aggregat nicht läuft und wird verzögert mit den Signalen "Zünddrehzahl" oder "Generatorspannung >85%" abgesteuert .

Die Verzögerungszeit kann am Bedientableau eingestellt werden.

### 4.21 Voralarm (Option)

Vorbedingung:
- Automatikbetrieb

Diese Funktion wird benötigt, um ein Standby Aggregat vorbeugend zu starten um zu verhindern, dass ein unverzögertes Stoppen erforderlich wird. Das Signal kann direkt von dem Aggregat als Voralarm kommen oder von dem Alarmsystem als Gruppenalarm. (z.B. Voralarm als Schmieröldruck und Kühlwassertemperatur).

Am Bedientableau kann eingestellt werden, ob das gestörte Aggregat gestoppt werden soll (mit vorheriger Lastrücknahme) oder am Netz verbleiben soll.

Die folgenden Meldungen werden am Bedientableau angezeigt:
- "VORALARM" (BM)

Mit Betätigung der "RESET" Taste wird die Meldung quittiert.

### 4.22 Fernbedienung

Ist die PMA71 an ein übergeordnetes Bedien- und Beobachtungssystem angeschlossen, so sind folgende Bedienungen möglich:
- Starten der Aggregate
- Stoppen der Aggregate
- Aktivieren/Deaktivieren der Zu- und Absetzkette
- Aktivieren/Deaktivieren des UBL-Betriebes
- Ein- Ausschalten der Landanschlüsse
- Ein- Ausschalten der Kuppelschalter

Außerdem werden die Istwerte wie Aggregate-Wirkleistung, Ströme, Spannungen und Frequenz in einem Standard-Datenbaustein bereitgestellt und können weiterverarbeitet werden.

Um die Bedienberechtigung an das B&B-System zu übergeben, ist am OP7 die Taste "Fern" zu betätigen.

Die Betriebsart wird als "FERN" am Bedientableau angezeigt.

Eine Bedienung über das OP7 ist während der Fernbedienung nicht möglich.

Soll die Bedienung wieder auf das OP7 zurückgeschaltet werden, so ist die Taste "Semi" oder "Automatik" zu betätigen.

Weitere Informationen sind der Bedienungsanleitung des entsprechenden B&B-Systems zu entnehmen.

### 5 Steuerung von Wellengeneratoren

### Allgemeiner Hinweis:

In der Beschreibung wird nur auf die Steuerung der WGA 23D und des konventionellen WG eingegangen.

### WGA 23D

Bei der WGA 23D handelt es sich um eine Wellengeneratorsteuerung bestehend aus einem Wellengenerator, einem statischen Umrichter sowie einer Blindleistungsmaschine. Mittels des Umrichters wird die Frequenz des Wellengenerators in die Sammelschienenfrequenz umgesetzt. Dieses ist möglich in einem Bereich von 40% bis 100% der Maschinendrehzahl. Es ist ein Parallelbetrieb zwischen WGA und Dieselgeneratoren möglich.

Die WGA 23D wird bei Schiffen mit Festpropellern und Verstellpropellern eingesetzt. Bei Schiffen mit Festpropeller ist die Steuerung der Schiffsgeschwindigkeit nur über die Drehzahl der Hauptmaschine möglich. Bei Schiffen mit Verstellpropellern wird die Schiffsgeschwindigkeit mit der Drehzahl der Hauptmaschine sowie mit der Propellersteigung geregelt. Damit erlaubt die WGA 23D den Wellengeneratorbetrieb in einem großen Drehzahlbereich.

### Standardwerte:

| Drehzahl der Hauptmaschine | Leistungsreserve der WGA 23D |
|---|---|
| 100% → 75% | 100% |
| 75% → 40% | 100% → 50% |

### WG-Steuerung über Planetengetriebe (z.B. Renck)

Hier ist der Wellengenerator mit der Hauptmaschine über ein Planetengetriebe gekoppelt. Auch hier ist ein Dauerparallelbetrieb im Bereich von 70% bis 100% der Maschinendrehzahl möglich.

Die Anpassung der Generatorfrequenz an die Hauptmaschinendrehzahl erfolgt hier über das Getriebe selbst.

### Konventioneller Wellengenerator (PTO)

Diese Steuerung wird vorwiegend bei Schiffen mit Verstellpropeller eingesetzt da die Wellengeneratorfrequenz durch Umschaltung der Hauptmaschine auf "constant speed" konstant gehalten wird. Die Schiffsgeschwindigkeit wird hier durch die Verstellung des Propellersteigung geregelt.

Ein Parallelbetrieb zwischen WG und DG ist nur zur Lastübergabe oder bei extrem ruhiger See möglich.

### 5.1 WGA 23D

### 5.1.1 Einschalten der WGA 23D

Das Einschalten der WGA 23D ist nur bei vorhandenem Bordnetz möglich. Ein "Blackout"-Start wie beim DG ist nicht möglich.

Das Einschalten der WGA 23D erfolgt vom Bedientableau der PMA 71 im Local Semiautomatikmode. Es sind einige Vorbedingungen zu erfüllen, um die WGA 23D einschalten zu'können.
- Die Drehzahl der Hauptmaschine ist im Arbeitsbereich
- Die Kupplung muß eingeschaltet sein
- Die Steuerung der WGA ist eingeschaltet
- Keine Fehlermeldung in der Steuerung

Sind diese Vorbedingungen erfüllt, so gibt die WGA 23D das Signal "STARTBEREIT" an die PMA 71.

Die folgende Meldung wird am Bedientableau angezeigt:

### "STARTBEREIT" (BM)

Bei Betätigung der Taste "START" wird die Meldung "BESTÄTIGEN DRÜCKEN" für eine einstellbare Zeit am Bedientableau angezeigt. Der Befehl wird jedoch erst ausgeführt, wenn innerhalb dieser Zeit die Übernahmetaste "BESTÄTIGEN" betätigt wird. Ist dies nicht der Fall, wird die Anforderung zurückgenommen. Ein Startkommando kann erst gegeben werden, wenn das Signal "STARTBEREIT" von der WGA 23D kommt. Wird die "BESTÄTIGEN" Taste innerhalb der Zeit betätigt, so wird ein Startbefehl an die WGA 230 Steuerung gegeben. Von der WGA 23D wird jetzt der Hochlauf gestartet. Die folgende Meldung wird am Bedientableau angezeigt:

### "START" (BM)

Mit dem Signal Generatorspannung >85% wird die Meldung
"BETRIEB" (BM)
angezeigt.

Nach Abschluss des Hochlaufes (nach ungefähr 60sek.) wird das Signal "Synchronisierbereit" und "Freigabe Generatorschalter" von der WGA 23D an die PMA71 gegeben.

Die folgenden Meldungen werden am Bedientableau angezeigt:
"SYNCHRONISIERBEREIT" (BM)
"FREIGABE GENERATORSCHALTER" (BM)

Wird die PMA71 auf "Automatik" geschaltet, wird die Synchronisierung gestartet. Nach dem Einschalten des Generatorschalters erfolgt die paritätische Lastverteilung.

Am Bedientableau wird der gerade aktive Betriebszustand und die abgegebene Wirkleistung des Generators angezeigt.

Das Signal "FREIGABE GENERATORSCHALTER" ist direkt zur Hauptschalttafel verdrahtet. Ohne dieses Signal ist ein Einschalten des Generatorschalters nicht möglich. Durch Rücknahme dieses Signals kann der Generatorschalter durch die WGA 23D ausgeschaltet werden (im Falle eines schwerwiegenden Fehlers).

### 5.1.2 Startfehler

Kommt das Signal "FREIGABE GENERATORSCHALTER" nicht innerhalb einer bestimmten Zeit nach Ausgabe des Start Kommandos, erscheint die folgende Meldung am Bedientableau:

### "STARTFEHLER" (FM)

### 5.1.3 Manuelles Ausschalten des WG im Parallelbetrieb

Die WGA 23D kann vom Bedientableau der PMA 71 aus im Lokal Semiautomatikmode gestoppt werden. Bei Betätigung der Taste "STOP" wird die Meldung "BESTÄTIGEN DRÜCKEN" für eine einstellbare Zeit am Bedientableau angezeigt. Der Befehl wird jedoch erst ausgeführt, wenn innerhalb dieser Zeit die übernahmetaste "BESTÄTIGEN" betätigt wird. Ist dies nicht der Fall, wird die Anforderung zurückgenommen.

Es wird ein Stopp-Befehl an die Steuerung die WGA 23D gegeben. Befindet sich das Aggregat im Netzparallelbetrieb, so wird vorher ein "STOP mit Lastrücknahme" durchgeführt.

Die BM "LAST RED" wird am Bedientableau angezeigt. Es werden "TIEFER"-Verstellimpulse ausgegeben, um das Aggregat zu entlasten.

Mit Unterschreiten des Grenzwertes "GEN.LEISTUNG MIN." wird der Generatorschalter ausgeschaltet. Nach Ausschalten des Generatorschalters wird ein "STOP" Befehl an die Steuerung der WGA 23D gegeben.

Mit Ausgabe des "STOP"-Befehls wechselt die Betriebsmeldung am Bedientableau von "LAST RED" nach "AGGREGAT STOPPT".

### 5.1.4 Manuelles Ausschalten des WG im Inselbetrieb

Befindet sich der WG allein am Netz so würde ein Ausschalten einen "Blackout" bedeuten.

Es muss vorher ein Dieselaggregat gestartet und synchronisiert werden. Nach dem synchronisieren des DG ist die weitere Funktion wie unter Abschnitt 5.1.3 beschrieben.

### 5.1.5 Slow Down von Hauptmaschine

Der PMA71 wird dieses Signal über einen potentialfreien Kontakt aus der Dieselfernsteuerung zugeführt.

Im Falle von "slow down" wird Drehzahl der Hauptmaschine für eine gewisse Zeit von der Fernsteuerung gehalten um ein Standby Aggregat zu starten und eine Lastübernahme durchzuführen.

Kommt dieses Signal, wird die PMA71 blockiert und ein Stand-by-Aggregat gestartet.

Am Bedientableau wird die Meldung:
- "SLOW DOWN VON HAUPTMASCHINE"
angezeigt.

Nach dem Starten und Synchronisieren des Standby-Aggregats führt die PMA71-Steuerung der WGA 23D ein "stopp mit Lastrücknahme" durch. Es werden "TIEFER"-Verstellimpulse ausgegeben, um das Aggregat zu entlasten. Während des Entlastungsvorgangs wird am Bedientableau die BM "LAST RED" angezeigt. Mit Unterschreiten des Grenzwertes "GEN.LEISTUNG MIN." wird der Generatorschalter ausgeschaltet.

Mit dem Ausschalten des Generatorschalters wird die PMA-Steuerung der WGA 23D auf "Lokal Semiautomatikmode" umgeschaltet. Gleichzeitig wird ein "STOP"-Befehl an die Steuerung der WGA 23D gegeben. Mit der Ausgabe des "STOP" Kommandos wechselt die Betriebsmeldung von "LAST RED" zu "STOP"

Nach dem Ausschalten des Generatorschalters setzt die Fernsteuerung das "slow down" der Hauptmaschine fort. Für diese Funktion muss ein potentialfreier Kontakt von der Schalttafel zur Dieselfernsteuerung geführt werden. (dies ist keine Funktion der PMA71)

### 5.1.6 Shut Down von Hauptmaschine

Der PMA71 wird dieses Signal über einen potentialfreien Kontakt aus der Dieselfernsteuerung zugeführt.

Im Gegensatz zum "Slow Down von Hauptmaschine" wird die Drehzahl der Hauptmaschine hier nicht für eine bestimmte Zeit gehalten. Es hängt von der Änderungsgeschwindigkeit der Hauptmaschine ab ob genug Zeit für den Start eines Stand-by Aggregates und einem Lasttransfer vorhanden ist.

Normalerweise führt ein "Shut Down" der Hauptmaschine zu einem "Blackout"".

Mit dem Signal wird ein Startbefehl an das Standby Aggregat gegeben und die WGA 23D Steuerung blockiert. Ist die Funktion "zwei Generatoren im Fehlerfalle starten" gewählt, so werden zwei Dieselaggregate gestartet.

Am Bedientableau wird die Meldung:
- "NOTSTOP VON HAUPTMASCHINE"
angezeigt.

Nach dem Starten und Synchronisieren des Standby-Aggregats führt die PMA71-Steuerung der WGA 23D ein "Stop mit Lastrücknahme" durch. Es werden "TIEFER"-Verstellimpulse ausgegeben, um das Aggregat zu entlasten. Während des Entlastungsvorgangs wird am Bedientableau die BM "LAST RED" angezeigt. Mit Unterschreiten des Grenzwertes "GEN.LEISTUNG MIN." wird der Generatorschalter ausgeschaltet.

Mit dem Ausschalten des Generatorschalters wird die PMA-Steuerung der WGA 23D auf "Lokal Semiautomatikmode" umgeschaltet. Gleichzeitig wird ein "STOP"-Befehl an die Steuerung der WGA 23D gegeben. Mit der Ausgabe des "STOP" Kommandos wechselt die Betriebsmeldung von "LAST RED" zu "STOP"

Ist die Drehzahl der Hauptmaschine unterhalb des Arbeitsbereiches der WGA23D abgesunken bevor die Lastübergabe an das Standby Aggregat erfolgt ist, so wird der Generatorschalter unabhängig von der PMA71 durch die WGA 23D ausgeschaltet. Das bereits gestartete Standby Aggregat wird dann über "Blackout" zugeschaltet.

### 5.1.7 Maschinentelegraph (MT) < n_{Min}

Der PMA71 wird dieses Signal über einen potentialfreien Kontakt entweder über die Dieselfernsteuerung oder von der WGA 23D aus zugeführt.

Die Mindestdrehzahl für den Betrieb der WGA 23D ist normalerweise 40% der Nenndrehzahl der Hauptmaschine. Die Mindestdrehzahl ist jedoch abhängig von der Konstruktion der Hauptmaschine und der WGA 23D.

Wird der Hebel des MT unter diese Grenze gelegt, stoppt die Dieselfernsteuerung die Reduzierung der Drehzahl an diesem Punkt um den Start eines Standby Aggregates und eine Lastübernahme zu ermöglichen.

Kommt dieses Signal im Automatikbetrieb bei geschlossenem Generatorschalter wird ein Standby Aggregat gestartet.

Am Bedientableau wird die Meldung:
- "MT < N MIN" (BM)
angezeigt.

Nach dem Starten und Synchronisieren des Standby-Aggregats führt die PMA71-Steuerung der WGA 23D ein "STOP MIT LASTRÜCKNAHME" durch. Es werden "TIEFER"-Verstellimpulse ausgegeben, um das Aggregat zu entlasten. Während des Entlastungsvorgangs wird am Bedientableau die BM "LAST RED" angezeigt. Mit Unterschreiten des Grenzwertes "GEN.LEISTUNG MIN." wird der Generatorschalter ausgeschaltet.

Nach dem Ausschalten des Generatorschalters setzt die Dieselfernsteuerung die Reduzierung der Drehzahl fort.

Für diese Funktion muss ein potentialfreier Kontakt von der Schalttafel zur Dieselfernsteuerung geführt werden. (dies ist keine Funktion der PMA71)

### 5.1.8 Maschinentelegraph (MT) > n_{Min}

Wird der Hebel des MT wieder auf einen Wert großer als die Mindestdrehzahl gelegt, so wird die Funktion "STOP MIT LASTRÜCKNAHME" zurückgenommen. Die am BT evtl. bereits angezeigte BM "LAST RED" erlischt wieder. Das bereits gestartete Aggregat wird aufsynchronisiert und durch Unterbelastung oder manuell wieder abgesetzt.

### 5.1.9 Anforderung DG (Warnung)

Der PMA71 wird dieses Signal über einen potentialfreien Kontakt von der WGA 23D aus zugeführt. Das Signal kommt, wenn die WGA 23D eine Überlastung erkannt hat.

Es wird ein Standby Aggregat gestartet.

Am Bedientableau wird die Meldung:
- "DG ANFORDERUNG VOM WG" (BM)
angezeigt.

Nach dem Starten und der Synchronisieren des Standby Aggregates wird ein Lastabgleich durchgeführt.

### 5.1.10 WG VERZÖGERT STOP

Der PMA71 wird dieses Signal über einen potentialfreien Kontakt von der WGA 23D aus zugeführt.

Hat die WGA 23D eine Störung erkannt die den Betrieb noch für eine kurze Zeit erlaubt, so wird das Signal "WG VERZÖGERT STOP" zur PMA71 gegeben. Normalerweise ist diese Zeit ausreichend für den Start und die Lastübernahme eines Standby Aggregates.

Kommt dieses Signal, so wird ein verzögerter Stopp der WGA, 23D, Blockierung der Steuerung sowie der Start eines Standby Aggregates durchgeführt.

Am Bedientableau wird die Meldung:
- "WG VERZÖGERT STOP"
angezeigt.

Nach dem Starten und Synchronisieren des Standby-Aggregats führt die PMA71 -Steuerung der WGA 23D ein "Stopp mit Lastrücknahme" durch. Es werden "TIEFER"-Verstellimpulse ausgegeben, um das Aggregat zu entlasten. Während des Entlastungsvorgangs wird am Bedientableau die BM "LAST RED" angezeigt. Mit Unterschreiten des Grenzwertes "GEN.LEISTUNG MIN." wird der Generatorschalter ausgeschaltet.

Mit dem Ausschalten des Generatorschalters wird die PMA-Steuerung der WGA 23D auf "Lokal Semiautomatikmode" umgeschaltet Gleichzeitig wird ein "STOP"-Befehl an die Steuerung der WGA 23D gegeben. Mit der Ausgabe des "STOP" Kommandos wechselt die Betriebsmeldung von "LAST RED" zu "STOP".

### 5.1.11 WG UNVERZÖGERT STOP

Der PMA71 wird dieses Signal über einen potentialfreien Kontakt von der WGA 23D aus zugeführt.

Hat die WGA 23D eine kritische Störung erkannt die einen sofortigen Stopp erfordert, so wird dieses Signal an die PMA71 gegeben. Die WGA 23D wird entregt und der Generatorschalter wird ausgeschaltet. (Signal "Freigabe Generatorschalter" = Aus). Ist der Wellengenerator alleine am Netz so verursacht dieses Signal einen "Blackout".

Kommt dieses Signal, so wird ein unverzögerter Stopp der WGA 23D, ein Ausschalten des Generatorschalters, Blockierung der Steuerung sowie der Start eines Standby Aggregates durchgeführt.

Am Bedientableau wird die Meldung:
- "WG UNVERZÖGERT STOP"
angezeigt.

War die PMA71 im Automatikbetrieb, so wird auf Lokal Semiautomatikmode umgeschaltet.

Bei einem "Blackout" wird nach kurzer Hochlaufzeit das neu gestartete Standby Aggregat zugeschaltet oder es wird zusynchronisiert, wenn ein weiteres Aggregat am Netz Duft.

### 5.1.12 Rückleistungsschutz der WGA 23D

Ein Rückleistungsschutz des wellengenerators ist nicht erforderlich, da die WGA 23D keinen Rückleistungsfluss erlaubt.

Es ist jedoch ein kleiner Wirkleistungsfluss zur WGA 23D erforderlich um die Blindleistungsmaschine zu betreiben, wenn der Wellengenerator im Leerlauf ist. Um ein Ausschalten des Generatorschalters zu vermeiden, sollte der Rückleistungsschutz des Wellengenerators ausgeschaltet werden, oder der Grenzwert sollte so hoch gestellt werden, dass keine Auslösung erfolgen kann.

### 5.2 Konventioneller WG (PTO)

Die Frequenz des Wellengenerators ist abhängig von der Drehzahl der Hauptmaschine. Jede Änderung der Drehzahl (z.B. durch schwere See) ändert auch die Frequenz des Bordnetzes. Bei einem Parallelbetrieb mit einem Dieselgenerator führt dieses zu starken Lastverschiebungen. Deswegen erlaubt die PMA71 keinen Dauerparallelbetrieb zwischen SG und DG.

### 5.2.1 Einschalten des WG bei vorhandenem Bordnetz

Die hier beschriebene Funktion führt eine Lastübergabe von einem DG zu einem WG durch.

Die Hauptmaschine wird auf konstante Drehzahl umgeschaltet. Zu diesem Zweck wird der Fernsteuerung ein Kontakt zugeführt. Mit dem Einschalten des Kontaktes hält die Fernsteuerung die Hauptmaschine auf konstante Drehzahl fest. Mit dem Einschalten des WG erhält die Fernsteuerung das Signal "WG EIN". Eine Drehzahlreduzierung kann jetzt nur erfolgen, wenn zuvor der WG wieder ausgeschaltet wird und das Signal "WG EIN" verschwindet.

Zum Einschalten des WG sind folgende Bedingungen erforderlich:
- Generatorspannung > 85%
- Signal EINSCHALTBEREIT

Am BT werden die BM
- SEMI
- EINSCHALTBEREIT
angezeigt.

### Auf AUTOMATIK umschalten.

Mit dem Einschalten des Automatik Betriebes gibt die WG-Steuerung über die Verbindung der gemeinsamen Frequenzverstellung Verstellimpulse an das Dieselaggregat, um die Frequenz des Bordnetzes an die eigene Frequenz heranzuführen. (Funktioniert nur, wenn EINSCHALTBEREIT anliegt).

Das Synchronisieren erfolgt wie bei einem Dieselaggregat.
Nach dem Synchronisieren erhält der DG TIEFER Verstellimpulse von der WG-Steuerung und entlastet den DG.

Während des Entlastungsvorgangs wird am BT die BM LAST RED angezeigt. Nach dem Unterschreiten des Grenzwertes "Gen Leistung Minimum" wird der Generatorschalter ausgeschaltet.

Der DG kann noch einen Leerlastnachlauf durchführen (abhängig von der Projektierung) und wird danach gestoppt. Mit Ausgabe des Stop Befehls erlischt die BM LAST RED.

### 5.2.2 Ausschalten des WG

Die hier beschriebene Funktion führt eine Lastübergabe von einem SG zu einem DG durch.

Zum Ausschalten des WG wird ein DG im Local Semiautomatikmode gestartet. Nach Umschaltung auf AUTOMATIK wird die Synchronisierung des DG gestartet.

Nach dem Einschalten des Generatorschalters wird ein "Stop mit Lastrücknahme" des WG durchgeführt.

Während des Entlastungsvorgangs wird am ST die BM "LAST RED" angezeigt.

Die WG-Steuerung gibt über eine Verbindung zwischen den PMA71 Systemen Verstellimpulse an das Dieselaggregat. Es werden "Höhe" Verstellimpulse an den DG gegeben bis der WG unter dem Grenzwert "Generator Leistung Minimum" entlastet ist. Danach wird der Generatorschalter ausgeschaltet.

Mit dem Ausschalten des Generatorschalters erlischt die BM "LAST RED" und die WG-Steuerung wird auf Local Semiautomatikmode umgeschaltet.

### 5.2.3 Slow Down von Hauptmaschine

Der PMA71 wird dieses Signal über einen potentialfreien Kontakt von der Dieselfernsteuerung aus zugeführt.

Im Falle von "slow down" wird die Drehzahl der Hauptmaschine für eine gewisse Zeit von der Fernsteuerung gehalten um ein Standby-Aggregat zu starten und eine Lastübernahme durchzuführen.

Kommt dieses Signal, so wird ein verzögerter Stopp des WG, Blockierung der Steuerung sowie der Start eines Standby Aggregates durchgeführt.

Am Bedientableau wird die Meldung:
- "SLOW DOWN VON HAUPTMASCHINE" (SM)
angezeigt.

Nach dem Starten und Synchronisieren des DG wird ein "Stop mit Lastrücknahme" des WG durchgeführt.

Während des Entlastungsvorgangs wird am ST die BM "LAST RED" angezeigt.

Die WG-Steuerung gibt über eine Verbindung zwischen den PMA71 Systemen Verstellimpulse an das Dieselaggregat. Es werden "Höher" Verstellimpulse an den DG gegeben bis der WG unter dem Grenzwert "Generator breaker minimum power" entlastet ist. Danach wird der Generatorschalter ausgeschaltet.

Mit dem Ausschalten des Generatorschalters erlischt die BM "LAST RED" und die BM "BLOCKIERT" wird angezeigt.

Die WG-Steuerung wird auf Local Semiautomatikmode umgeschaltet.

Nach dem Ausschalten des Generatorschalters setzt die Fernsteuerung das "slow down" der Hauptmaschine fort. Für diese Funktion muss ein potentialfreier Kontakt von der Schalttafel zur Dieselfernsteuerung geführt werden. (dies ist keine Funktion der PMA71)

### 5.2.4 Notstopp von Hauptmaschine, Verz./Unverz. Stop des WG

Der PMA71 wird dieses Signal über einen potentialfreien Kontakt aus der Dieselfernsteuerung zugeführt.

Im Gegensatz zum "Slow Down von Hauptmaschine" wird die Drehzahl der Hauptmaschine hier nicht für eine bestimmte Zeit gehalten. Es hängt von der Änderungsgeschwindigkeit der Hauptmaschine ab, ob genug Zeit für den Start eines Stand-by Aggregates und einem Lasttransfer vorhanden ist.

Mit dem Signal wird ein Startbefehl an das Standby Aggregat gegeben und die WGA 23D Steuerung blockiert. Ist die Funktion "zwei Generatoren im Fehlerfalle starten" gewählt, so werden zwei Dieselaggregate gestartet.

Am Bedientableau wird die Meldung:
- "NOTSTOP VON HAUPTMASCHINE"
   angezeigt.

Nach dem Starten und Synchronisieren des DG wird ein "Stop mit Lastrücknahme" des WG durchgeführt.

Während des Entlastungsvorgangs wird am BT die BM "LAST RED" angezeigt.

Die WG-Steuerung gibt über eine Verbindung zwischen den PMA71 Systemen Verstellimpulse an das Dieselaggregat. Es werden "Höher" Verstellimpulse an den DG gegeben bis der WG unter dem Grenzwert "Generator breaker minimum power" entlastet ist. Danach wird der Generatorschalter ausgeschaltet.

Mit dem Ausschalten des Generatorschalters erlischt die BM "LAST RED" und die BM "BLOCKIERT" wird angezeigt.

Die WG-Steuerung wird auf Local Semiautomatikmode umgeschaltet.

Ist die Drehzahl bereits unter dem Arbeitsbereich des WG (Generatorschalter fällt durch Unterspannung oder Unterfrequenz) abgesunken, wird das bereits gestartete Standby Aggregat über "Blackout" zugeschaltet.

### 5.2.5 Rückleistung

Während der Lastübernahme oder Lastübergabe kann der DG durch starke Drehzahlschwankungen der Hauptmaschine (Austauchen der Schiffsschraube durch Seegang usw.) in Rückleistung gehen. Deshalb ist die Rückleistungsauswertung des DG während dieser Zeit gesperrt. Beim WG ist die Rückleistungsauswertung generell gesperrt, da er immer alleine läuft.

### 6 Bordnetzüberwachung

Die Bordnetzüberwachung hat die folgenden Aufgaben:
- Start eines Standby Aggregates im Falle von "Blackout" um die Verbraucher so schnell wie möglich wieder mit elektrischer Energie zu versorgen
- Schutz des Bordnetzes gegen unzulässige Frequenzabweichungen (Unterfrequenz) durch Abschaltung unwichtiger Verbraucher
- Schutz des Bordnetzes gegen unzulässige Frequenzabweichungen (Unterfrequenz/Überfrequenz) durch Abschaltung des Generatorschalters. Ist die Sammelschienenfrequenz weit von der Nennfrequenz entfernt, ist eine Synchronisierung oft nicht möglich, da sich die Nennfrequenz außerhalb des Einstellbereiches der Drehzahlverstelleinrichtung befindet. Deswegen erfolgt die Umschaltung über "Blackout".
- Schutz des Bordnetzes gegen unzulässige Spannungsabweichungen (Unterspannung/Überspannung) durch Abschaltung des Generatorschalters. In diesem Falle wird keine Parallelschaltung durchgeführt, da durch die unterschiedlich hohe Spannungseinstellung der Sammelschiene und des zuzuschaltenden Generators ein hoher Blindstrom fließen würde. Deswegen erfolgt die Umschaltung über "Blackout".

### 6.1 Blackout

Vom Schalttafelhersteller ist eine Sammelschienenüberwachung , (z.B. zwei Hilfsschütze) vorzusehen. Diese Hilfsschütze sind über einen Schutzschalter zwischen die Phasen L1-L2, L2-L3 zu schalten. Von jedem Relais werden zwei Hilfskontakte (1S, 10) und vom Schutzschalter wird ein Hilfskontakt (1S) benötigt. Diese Hilfskontakte müssen so geschaltet werden, dass für die PMA 71 zwei Signale zur Verfügung stehen.
a) Signal "Blackout" (alle Hilfsschütze abgefallen, O, Schutzschalter, S)
b) Signal "Sammelschienenspannung vorhanden" (alle Hilfsschütze angezogen, S)

Mit dieser Schaltung wird sichergestellt, dass durch die Ausschaltung des Leistungsschalters oder durch den Ausfall einer oder von zwei Phasen kein "Blackout" erkannt wird. Am Bedientableau wird die folgende Meldung angezeigt:
- "FEHLER SAMMELSCHIENENÜBERWACHUNG" (SM)

Die Sammelschienenüberwachung ist 1x für jede PMA 71 vorzusehen. Die Hilfskontakte der Relais werden an die entsprechenden Anschlüsse der PMA 71 angeschlossen.

Wird "BLACKOUT" erkannt, so wird das nächste zur Verfügung stehende Aggregat gestartet und bei überschreiten von > 85 % Generatorspannung nach einer kurzen Verzögerungszeit eingeschaltet.

Ein gleichzeitiges Zuschalten der Generatorschalter mehrerer gleichzeitig gestarteter Aggregate auf die spannungslose Sammelschiene wird durch eine Simultansperre verhindert.

### 6.2 Unterfrequenz/überfrequenz

### Automatikbetrieb

Die Frequenz des Bordnetzes wird über das Generatorschutzgerät/Messumformer erfasst und in der SIMATIC-S7 überwacht.

Die Grenzwerte und Verzögerungszeiten für Unterfrequenz/Überfrequenz können vom Bedientableau aus geändert werden. Die Funktion ist paßwortgeschützt.

Folgende Meldungen werden bei Unter- bzw. Überschreitung der jeweiligen Grenzwerte ausgegeben:
- "Überfrequenz"
- "Unterfrequenz 1"
- "Unterfrequenz 2" '
- "Unterfrequenz 3"

Die ausgelösten Funktionen sind in der Tabelle "GENERATORSCHUTZ" in Abschnitt 7 aufgeführt.

### Lokal Semiautomatikmode

Luft ein Aggregat im Handbetrieb und wird Unterfrequenz oder Überfrequenz erkannt, so erfolgen die Meldungen wie oben beschrieben, jedoch wird kein Aggregat zugesetzt.

### 6.3 Unterspannung/Überspannung

### Automatikbetrieb

Die Spannung des Bordnetzes wird über das Generatorschutzgerät/Messumformer erfasst und in der SIMATIC-S7 überwacht.

Die Grenzwerte und Verzögerungszeiten für Unterspannung/Überspannung können vom Bedientableau aus geändert werden. Die Funktion ist paßwortgeschützt.

Folgende Meldungen werden bei Unter- bzw. Überschreitung der jeweiligen Grenzwerte ausgegeben:
- "Überspannung"
- "Unterspannung 1"
- "Unterspannung 2"
- "Unterspannung 3"

Die ausgelösten Funktionen sind in der Tabelle "GENERATORSCHUTZ" in Abschnitt 7 aufgeführt.

### Lokal Semiautomatikmode

Läuft ein Aggregat im Handbetrieb und wird Unterspannung oder Überspannung erkannt, so erfolgen die Meldungen wie oben beschrieben, jedoch wird kein Aggregat zugesetzt.

### 7 Generatorschutz

Der Generatorschutz hat folgende Aufgaben:
- Schutz des Generators und des Bordnetzes vor den Folgen eines Kurzschlusses durch Abschaltung der Generatorschalter der das Bordnetz speisenden Generatoren. Dabei wird die Abschaltung normalerweise kurzzeitverzögert, um untergeordneten Leistungsschaltern Zeit zum Abschalten zu geben (Selektivität).
- Kurzschlusszählung, Stopp und Blockierung des Aggregates und Umschaltung der anderen Aggregate auf Handbetrieb, um ein automatisches Zuschalten eines Standby-Generators auf die Sammelschiene zu verhindern.
- Evtl. Zulassung eines Standby-Starts und Zuschalten des Generators auf die Sammelschiene (dieses bedeutet einen 2. Kurzschluss, falls der Kurzschluss nicht inzwischen geklärt ist).
- Schutz des Generators vor Überlastung durch Abschaltung des Generatorschalters bei Überstrom.
- Schutz des Generators vor Überlastung durch Abschaltung unwichtiger Verbraucher bei Überstrom, Überlast.
- Abschalten des Generatorschalters bei Rückleistung.
- Mitunter ist auch eine urverzögerte Kurzschlussauslösung für sehr große Kurzschlussströme oder ein Differentialschutz erforderlich. Diese Funktionen sind nicht in der PMA 71 enthalten, sondern separat in der Schaltanlage zu realisieren.

### 7.1 Kurzschluss

Die Überwachung der Generatorströme auf Kurzschluss erfolgt im Generatorschutzgerät/Messumformer GENOP'71. Beim Auftreten eines Kurzschlusses wird das Ausgangsrelais für den Generatorschalter angesteuert. Um eine Selektivität zwischen dem Generatorschalter und den untergeordneten Leistungsschaltern zu erreichen, wird der Generatorschalter normalerweise verzögert abgeschaltet.

Der Grenzwert und die Verzögerungszeit können über das Bedientableau eingestellt werden. Die Funktion ist passwortgeschützt.

An den betreffenden Diesel (bzw. an die Wellengeneratorsteuerung) wird ein Stopp-Befehl ausgegeben. Am Bedientableau werden die Meldungen angezeigt:
- "KURZSCHLUSS GENERATOR" (sm)
- "BLOCKIERT" (BM)

Am Bedientableau der anderen Aggregate wird die Meldung angezeigt:
- "KURZSCHLUSS ANDERES AGGR." (SM)

Es kann eingestellt werden, ob 1 oder 2 Kurzschlüsse zugelassen sind.

Ist nur 1 Kurzschluss zugelassen, werden bereits nach dem 1. Kurzschluss alle anderen Aggregate auf "Semiautomatik" umgeschaltet. Die anderen Aggregate starten nicht.

Sind 2 Kurzschlüsse zugelassen, wird nach dem 1. Kurzschluss ein Standby-Aggregat gestartet und auf das Netz geschaltet. Gibt es einen 2. Kurzschluss, wird auch dieses Aggregat gestoppt und gesperrt und alle anderen Aggregate werden auf "Semiautomatik" umgeschaltet. Somit wird der Start und das Zuschalten eines dritten Aggregates verhindert.

Der Aus-Befehl für den Generatorschalter kommt direkt vom Generatorschutzgerät/Messumformer und funktioniert auch noch bei Ausfall der SPS oder der DC 24V-Speisespannung (Versorgung des Generatorschutzgerätes aus der Generatorspannung). Die anderen Funktionen laufen in der SPS ab.

### 7.1.1 Kurzschlussquittierung

Die Kurzschlussspeicherung des eigenen Aggregats muss von Hand quittiert werden. Nach dem Verschwinden des Stopp-Befehls kann die Blockierung des Aggregats aufgehoben werden.

### 7.2 Überstrom

Die drei Generatorströme I_{L1}/I_{L2}/I_{L3} werden im Generatorschutzgerät/ Messumformer auf Überschreitung von verschiedenen Grenzwerten überwacht. Überschreitet mindestens einer der Ströme den Grenzwert, werden nach Ablauf von Verzögerungszeiten unwichtige Verbraucher und/oder der Generatorschalter abgeschaltet. Die Grenzwerte und Verzögerungszeiten können über das Bedientableau verändert werden. Die Funktion ist paßwortgeschützt.

Es werden folgende Signale ausgegeben:
- Abschaltung unwichtiger Verbraucher Stufe 1
- Abschaltung unwichtiger Verbraucher Stufe 2
- Abschaltung unwichtiger Verbraucher Stufe 3
- Abschaltung Generatorschalter
- Aggregat Stopp-Befehl
- Aggregat blockieren
- Umschaltung auf Semiautomatik

Die Zuordnung der einzelnen Funktionen zu den Grenzwerten sowie die Standardeinstellungen sind in der Tabelle 7.8 dargestellt.

Am Bedientableau werden je nach ausgelöster Funktion die folgenden Meldungen angezeigt:
- "ABSCH. UNWICHT. VERBRAUCHER 1" (SM) oder
   "ABSCH. UNWICHT. VERBRAUCHER 2" (SM) oder
   "ABSCH. UNWICHT. VERBRAUCHER 3" (SM) oder
   "ÜBERSTROM, STANDBY START" (SM)
   "BLOCKIERT" (BM)
   "SEMI" (BM)
   "Gen. Schalterfall" (SM)

Der Aus-Befehl für den Generatorschalter und für die unwichtigen Verbraucher kommt direkt vom Generatorschutzgerät/Messumformer und funktioniert auch noch bei Ausfall der SPS oder der DC 24V-Speisespannung (Versorgung des Generatorschutzgerätes aus der Generatorspannung). Die anderen Funktionen laufen in der SPS ab.

### 7.3 Überlast

Die abgegebene Leistung des Generators wird im Generatorschutzgerät GENOP 71 erfasst und in der Simatic-S7 überwacht. Die Grenzwerte für überlast können vom Bedientablau aus geändert werden. Die Funktion ist paßwortgeschützt.

Es werden folgende Signale ausgegeben:
- Abschaltung unwichtiger Verbraucher Stufe 1
- Abschaltung unwichtiger Verbraucher Stufe 2
- Abschaltung unwichtiger Verbraucher Stufe 3
- Abschaltung Generatorschalter
- Aggregat Stopp-Befehl
- Aggregat blockieren
- Umschaltung auf Semiautomatik

Die Zuordnung der einzelnen Funktionen zu den Grenzwerten sowie die Standardeinstellungen sind in der Tabelle 7.8 dargestellt.

Am Bedientableau werden je nach ausgelöster Funktion die folgenden Meldungen angezeigt:
- "ABSCH. UNWICHT. VERBRAUCHER 1" (SM) oder
   "ABSCH. UNWICHT. VERBRAUCHER 2" (SM) oder
   "ABSCH. UNWICHT. VERBRAUCHER 3" (SM) oder
   "ÜBERSTROM, STANDBY START" (SM)
   "BLOCKIERT" (BM)
   "SEMI" (BM)
   "Gen. Schalterfall" (SM)

Der Aus-Befehl für den Generatorschalter und für die unwichtigen Verbraucher kommt direkt vom Generatorschutzgerät/Messumformer und funktioniert auch noch bei Ausfall der SPS oder der DC 24V-Speisespannung (Versorgung des Generatorschutzgerätes aus der Generatorspannung). Die anderen Funktionen laufen in der SPS ab.

### 7.3.1 Überwachung der Stromwandler

Die Überwachung der Stromwandler wird bei eingeschaltetem Generatorschalter durchgeführt. Zu diesem Zweck wird der Mittelwert mit dem Extremwert verglichen. Folgende Zustände ergeben eine Fehlermeldung:
- Extremwert (größter Wert der drei Generatorströme I_{L1}/I_{L2}/I_{L3}) kleiner als der Mittelwert
- Mittelwert kleiner als 75 % des Extremwertes

Bei Auftreten einer Störung wird am Bedientableau die Meldung angezeigt:
- "FEHLER IN DER STROMMESSUNG" (SM)

Diese Überwachung setzt eine weitgehend symmetrische Aufteilung der einphasigen Bordnetzverbraucher voraus. Erkannt werden können dadurch Fehler des Stromwandlers und Drahtbruch im Stromwandlerkreis.

Die Funktion ist über das Bedientableau abschaltbar.

### 7.4 Rückleistung

Die Wirkleistung wird im Generatorschutzgerät/Messumformer überwacht. Wird der Grenzwert für Rückleistung überschritten, wird nach Ablauf einer Verzögerungszeit der Generatorschalter abgeschaltet. Der Grenzwert und die Verzögerungszeit können über das Bedientableau verändert werden. Die Funktion ist paßwortgeschützt.

Es werden folgende Signale ausgegeben:
- Abschaltung Generatorschalter
- Aggregate Stopp-Befehl
- Aggregat blockieren
- Umschaltung auf Local Semiautomatikmode
- Anforderung Standby-Aggregat

Am Bedientableau werden die Meldungen angezeigt:
- "RÜCKLEISTUNG" (Sm)
- "BLOCKIERT" (BM)

Der Grenzwert und die Verzögerungszeit können über das Bedientableau verändert werden. Die Funktion ist paßwortgeschützt. Die Standardeinstellungen sind in der Tabelle 7.8 dargestellt.

Der Aus-Befehl für den Generatorschalter kommt direkt vom Generatorschutzgerät/Messumformer und funktioniert auch noch bei Ausfall der SPS oder der DC 24V-Speisespannung. Die anderen Funktionen laufen in der SPS ab.

### 7.5 Externer Generatorschutz

Mitunter sind einige der oben beschriebenen Generatorschutz-Funktionen bereits im Generatorschalter oder in der Schalttafel integriert. Um eine doppelte Auslösung mit fast gleichen Grenzwerten von 2 unterschiedlichen Steilen aus zu vermeiden, könnten in diesem Fall die betreffenden Grenzwerte in der PMA so hoch gesetzt werden, dass eine Auslösung nur durch den Generatorschutz in der Schalttafel erfolgt.

Die sonst von der PMA ausgeführten Funktionen (Standby-Start, Fehlermeldung, usw.) kommen in diesem Fall nicht.

### 7.6 Generator-Schalter mit eingebautem Kurzschluss-Auslöser (Option)

Wird ein Generator-Schalter verwendet, welcher eine eigene Kurzschlussauslösung besitzt, so ist zum Aufbau der Kurzschlusszählkette ein Hilfskontakt des Generatorschalters erforderlich (Kontakt offen bei Kurzschluss). Die Kurzschlusserfassung im Generatorschutzgerät/Messumformer sollte dann sinnvollerweise unwirksam gemacht werden.

### 7.7 Unverzögerte Kurzschluss-Auslösung (Option)

Einige Klassen fordern eine unverzögerte Auslösung des Generatorschalters bei besonders großen Kurzschlussströmen. Hierzu ist im Generatorschalter eine entsprechende Auslöseeinrichtung vorzusehen.

Der Auslösepunkt liegt über dem Kurzschlussstrom eines Einzelaggregates. Eine Auslösung kann nur erfolgen, wenn sich der Kurzschlussort zwischen Generator und Generatorschalter oder im Generator selbst befindet, und zwei oder mehr Generatoren, die sich im Parallelbetrieb mit dem gestörten Aggregat befinden, auf die Kurzschlussstelle speisen.

Bei der PMA ist ein Digitaleingang für den Anschluss eines Meldekontakt des unverzögerten Kurzschlussauslösers vorgesehen (Auslösung = Kontakt geschlossen). Bei einer Auslösung werden von der PMA folgende Signale ausgegeben:
- Abschaltung Generatorschalter
- Aggregat Stopp-Befehl
- Aggregat blockieren
- Umschaltung auf Hand
- Zusetzbefehl an das nächste Aggregat

Am Bedientableau werden die Meldungen angezeigt:
- "UNVERZÖGERTE KURZSCHLUSSAUSLÖSUNG" (SM)
- "BLOCKIERT" (BM)
- "SEMI" (BM)

### 7.8 Differentialschutz (Option)

Ab einer gewissen Leistung des Generators fordern einige Klassen einen Differentialschutz. Hierzu ist eine externe Differentialschutzüberwachungseinrichtung vorzusehen.

Bei der PMA ist ein Digitaleingang für den Anschluss eines Meldekontakt der externen Differentialschutzüberwachungseinrichtung vorgesehen (Auslösung = Kontakt geschlossen). Bei einer Auslösung werden von der PMA folgende Signale ausgegeben:
- Abschaltung Generatorschalter
- Aggregat Stopp-Befehl
- Aggregat blockieren
- Umschaltung auf Local Semiautomatik
- Zusetzbefehl an das nächste Aggregat

Am Bedientableau werden die Meldungen angezeigt:
- "DIFFERENTIALSCHUTZ AUSGELÖST" (SM)
- "BLOCKIERT" (BM)
- "SEMI" (BM)

### 7.9 Tabelle mit den Generatorschutzfunktionen (Tabelle 7.8)

| GRENZ-WERT | IN % | | ZEIT-WERT <SEK> | ANFOR-DERUNG STANDBY AGGREG. | ABSCH. UNW. VERBR. 1 | ABSCH. UNW. VERBR. 2 | ABSCH. UNW. VERBR. 3 | ABSCH. GEN. SCH. | BLOCK. AGGR. | MOTOR STOPP | UMSCH. Auto → Semi |
|---|---|---|---|---|---|---|---|---|---|---|---|
| GENERATORSTROM | | | | | | | | | | | |
| 1 | 95 | | 30 | X | | | | | | | |
| 2 | 100 | | 5 | X | | | | | | | |
| 3 | 100 | | 5 | | x(1) | | | | | | |
| 4 | 100 | | 10 | | | x(1) | | | | | |
| 5 | 100 | | 15 | | | | x(1) | | | | |
| 6 | 120 | | 1 | X | X(1) | X(1) | X(1) | | | | |
| 7 | 110 | | 30 | | | | | X(1) | X | X | X |

| GENERATORLEISTUNG | | | | | | | | | | | |
|---|---|---|---|---|---|---|---|---|---|---|---|
| 1 | 95 | | 30 | X | | | | | | | |
| 2 | 100 | | 5 | X | | | | | | | |
| 3 | 100 | | 5 | | X | | | | | | |
| 4 | 100 | | 10 | | | X | | | | | |
| 5 | 100 | | 15 | | | | X | | | | |
| 6 | 110 | | ' 1 | X | X | X | X | | | | |
| 7 | -10 | | 6 | | | | | X (1) | X | X | X |

| FREQUENZ SAMMELSCHIENE | | | | | | | | | | | |
|---|---|---|---|---|---|---|---|---|---|---|---|
| 1 | 97.5 | | 60 | X | | | | | | | |
| 2 | 95 | | 8 | X (3)(4) | | | | | | | |
| 3 | 95 | | 6 | | X | | | | | | |
| 4 | 95 | | 10 | | | X | | | | | |
| 5 | 95 | | 15 | | | | X | | | | |
| 6 | 90 | | 1 | X(3) | X | X | X | | | | |
| 7 | 90 | | 15 | | | | | X | X | X | X |
| 8 | 105 | | 2 | | | | | | | | |

| GENERATORSPANNUNG | | | | | | | | | | | |
|---|---|---|---|---|---|---|---|---|---|---|---|
| 1 | 90 | | 5 | X(3)(4) | | | | | | | |
| 2 | 60 | | 1 | | | | | X | X | X | X |
| 3 | 105 | | 5 | X (3)(4) | | | | | | | |
| 4 | 110 | | 5 | X(2) | | | | | | | |

| | | | | | | | | | | | |
|---|---|---|---|---|---|---|---|---|---|---|---|
| (1) Funktion realisiert im GENOP 71 (unabhängig von der SPS S7-300) (2) Zusätzlich erfolgt Entregung des Generators (3) Umschaltung erfolgt über blackout nachdem das neu gestartete Aggregat einschaltbereit ist. | | | | | | | | | | | |

### 8 Powermanagement

Das Powermanagement hat folgende Aufgaben:
- Starten von Standby-Aggregaten bei Überstrom, Überlast, Unterfrequenz
- Festlegung der Startreihenfolge der Standby-Aggregate
- Anwahl einer Mindestzahl von Generatoren (Option)
- Zeitverzögerte Abschaltung von nicht benötigten Generatoren (Unterlast)
- Festlegung der Abschaltreihenfolge der nicht benötigten Generatoren
- Regelung der Sammelschienenfrequenz (Konstantfrequenz oder mit Statik)
- Wirklastverteilung zwischen den Generatoren (Proportional der Nennleistungen oder ungleichmäßige Lastverteilung)
- Blindlastverteilung (Option)

### 8.1 Zusetzkette

Durch die Zusetzkette wird vorgewählt, welches Aggregat im Falle einer Anforderung durch die PMA 71 (Überlast, Überstrom usw,) als nächstes starten wird. Diese Funktion kann von jedem Bedientableau aus durchgeführt werden.

Durch drücken von 2 x "ENTER" und 1 x ↓ am Bedientableau wird das Untermenü "REIHENFOLGE START/STOPP" wie folgt angezeigt:

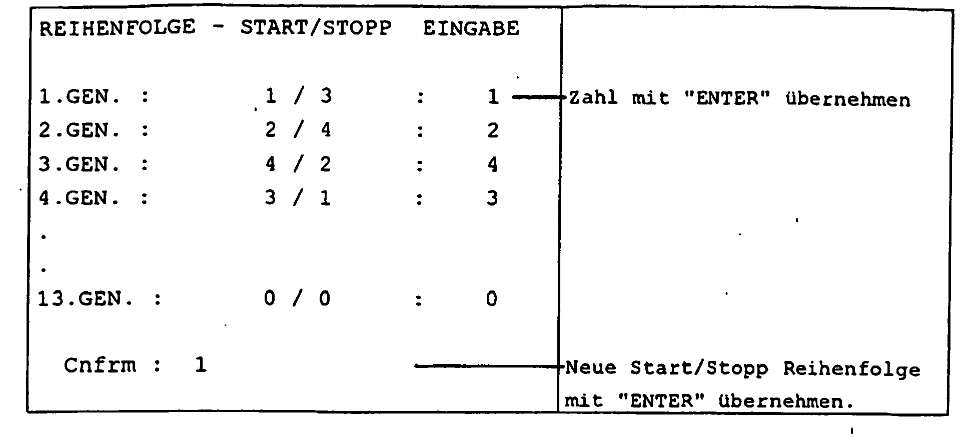

In der Spalte "EINGABE" wird die neue Startreihenfolge eingegeben. Jede Eingabe ist mit "ENTER" zu bestätigen. Von Zeile zu Zeile wird mit den Tasten ↓↑ gesprungen.

Die Übernahme der neuen Reihenfolge erfolgt durch eintragen einer "1" in die Zeile "Cnfrm" sowie Abschluss mit "ENTER".

Die neue Start/Stopp Reihenfolge wird jetzt in der Spalte "Start/Stopp" angezeigt. Doppeleingaben sowie Falscheingaben werden mit der Fehlermeldung
"ÄNDERN START/STOPP REIHENFOLGE NICHT MÖGLICH" abgewiesen.

### 8.1.1 Stopp durch Unterbelastung

Vorbedingungen:
- Automatikbetrieb
- Funktion ist freigegeben
- Aggregat läuft nicht im "UBL-Mode"

### Allgemein

Das Absetzen eines Aggregates erfolgt bei Unterbelastung. Hierzu wird die Generatorwirkleistung mit einem Grenzwert verglichen. Es gibt hierfür 3 verschiedene Grenzwerte für den Parallelbetrieb von 2, 3 und 4 oder.mehr Aggregate. Die Grenzwerte sind so einzustellen, dass die verbleibende Last nicht zu einer erneuten Anforderung eines Standby Aggregates führt.

### Absetzreihenfolge

Die Absetzreihenfolge ist gegenläufig zur Zusetzreihenfolge. Die Zusetzreihenfolge wird am Bedientableau vorgewählt (siehe Zusetzkette). Ist ein Aggregat gemäß der Absetzreihenfolge nicht absetzbereit, weil es z. B. nicht läuft oder nicht auf Automatik steht, so wird das nächste in der Reihenfolge abgesetzt.

Ist die Startreihenfolge 1>2>3 so ist die Stoppreihenfolge 3>2>1. Das Aggregat das als nächstes im Falle von Unterbelastung gestoppt wird ist im Bedientableau als "NEXT STOP" angezeigt

### Absetzvorgang

Im Falle von Unterbelastung wird nach einer einstellbaren Verzögerungszeit (Standardzeit 30 Sek.) die folgende Meldung am Bedientableau ausgegeben:
- UNTERBELASTUNG

Nach einer einstellbaren Verzögerungszeit von 10 Minuten (Standard) wird ein "Stop mit Lastrücknahme" durchgeführt und das Aggregat gestoppt. Am Bedientableau wird die Meldung:
- UNTERBELASTUNG, AGGREGAT WIRD GESTOPPT"
ausgegeben. Nach Ablauf der Stoppzeit steht das Aggregat wieder zur Verfügung.

### 8.1.2 Sperre Absetzkette

Die Stop durch Unterbelastung Funktion kann vom Bedientableau aus blockiert werden. Im zweiten Untermenü wird der folgende Text angezeigt:

Durch drücken von 2 x "ENTER" am Bedientableau wird das Untermenü "FREIGABE STOPP REIHENFOLGE" wie folgt angezeigt:

| FREIGABE- ABSETZKETTE | |
|---|---|
| ABSETZKETTE | Aktiv |
| AKTIV/DEAKTIV | 1 |

Durch die Eingabe von "1" oder "0" sowie "ENTER" wird die Absetzkette freigegeben oder gesperrt. Wird die Absetzkette gesperrt, so bleiben alle am Netz befindlichen Aggregate am Netz, auch wenn Unterbelastung im Bordnetz auftritt.

### 8.2 Standby-Start durch Überstrom

Der Istwert der drei Generatorströme I_{L1}/I_{L2}/I_{L3} werden vom Generatorschutzgerät/Messumformer an die SPS gegeben. Dort werden die Ströme auf Überschreitung von 3 verschiedenen Grenzwerten überwacht. Überschreitet mindestens einer der Ströme einen Grenzwert, wird nach Ablauf einer Verzögerungszeit ein Standby-Aggregat angefordert. Grenzwerte und Zeiten sind so gestaffelt, dass bei geringer Überschreitung des Grenzwerts eine langsame Reaktion und bei starker Überschreitung des Grenzwerts eine schnelle Reaktion erfolgt.

Am Bedientableau wird folgende Meldung angezeigt:
- "STANDBY-START" (SM) oder

Die Grenzwerte und Verzögerungszeiten können über das Bedientableau verändert werden. Die Funktion ist paßwortgeschützt. Die Zuordnung der einzelnen Funktionen zu den Grenzwerten sowie die Standardeinstellungen sind in der Tabelle 7.8 dargestellt.

### 8.3 Standby-Start durch Überlast

Der Istwert der Generatorwirkleistung wird vom Generatorschutzgerät/Messumformer an die SPS gegeben. Dort wird die Wirkleistung auf Überschreitung von 3 verschiedenen Grenzwerten überwacht. Wird ein Grenzwert überschritten, wird nach Ablauf einer Verzögerungszeit ein Standby-Aggregat angefordert. Grenzwerte und Zeiten sind so gestaffelt, dass bei geringer Überschreitung des Grenzwerts eine langsame Reaktion und bei starker Überschreitung des Grenzwerts eine schnelle Reaktion erfolgt.

Am Bedientableau wird folgende Meldung angezeigt:
- "STANDBY-START" (SM) oder

Die Grenzwerte und Verzögerungszeiten können über das Bedientableau verändert werden. Die Funktion ist paßwortgeschützt Die Zuordnung der einzelnen Funktionen zu den Grenzwerten sowie die Standardeinstellungen sind in der Tabelle 7.8 dargestellt.

### 8.4 Standby-Start durch Unterfrequenz

Der Istwert der Netzfrequenz wird vom Generatorschutzgerät/Messumformer an die SPS gegeben. Dort wird die Netzfrequenz auf Überschreitung von 3 verschiedenen Grenzwerten überwacht. Wird ein Grenzwert überschritten, wird nach Ablauf einer Verzögerungszeit ein Standby-Aggregat angefordert.

Grenzwerte und Zeiten sind so gestaffelt, dass bei geringer Überschreitung des Grenzwerts eine langsame Reaktion und bei starker Überschreitung des Grenzwerts eine schnelle Reaktion erfolgt.

Nur bei dem ersten Grenzwert (geringste Abweichung) wird allerdings das Standby-Aggregat zusynchronisiert. In den anderen beiden Fällen wird über "Blackout" auf hochgelaufene Standby-Aggregat umgeschaltet. (Diese Funktion ist unter 6.2 "Unterfrequenz/Überfrequenz" erläutert)

Am Bedientableau wird folgende Meldung angezeigt:
- "STANDBY-START" (SM) oder

Die Grenzwerte und Verzögerungszeiten können über das Bedientableau verändert werden. Die Funktion ist paßwortgeschützt Die Zuordnung der einzelnen Funktionen zu den Grenzwerten sowie die Standardeinstellungen sind in der Tabelle 7.8 dargestellt.

### 8.5 Wirklast- und Frequenzregelung

Die Signale des Frequenz- und des Wirkleistungsreglers werden beide auf Bewertungsstufen geführt. Die Ausgänge der Bewertungsstufen sind auf einen Schrittregler geführt der "Höher" oder "Tiefer" Impulse an den Aggregate-Drehzahlregler liefert.

Der Faktor des Lastreglers ist höher als der Faktor des Frequenzreglers, so dass der Einfluss des Wirkleistungsreglers höher ist als der des Frequenzreglers.

Hierdurch wird bewirkt, dass zuerst eine Lastverteilung zwischen den Aggregaten stattfindet. Erst danach wird die Frequenz auf den entsprechenden Sollwert geregelt.

### 8.5.1 Wirklastregelung

Es sind zwei verschiedene Betriebsarten möglich:
- Paritätische Lastverteilung Schieflast

### Paritätische Lastverteilung

In dieser Betriebsart übernimmt jeder Generator Leistung entsprechend seinen Nennwerten. Leistung
UBL-Mode ,

In dieser Betriebsart übernimmt ein Generator soviel Last wie möglich (UBL max.) jedoch nicht mehr als bis zu einem eingestellten Maximalwert. Das andere Aggregat übernimmt sowenig Last wie möglich, jedoch nicht weniger als bis zu einem eingestellten Minimalwert (UBL min.). Der Minimalwert hat eine höhere Priorität als der Maximalwert.

### 8.5.2 Frequenzregelung

Es sind zwei verschiedene Betriebsarten möglich:
- Konstante Frequenzregelung
- Frequenzregelung mit Statik

### Konstante Frequenzregelung

In dieser Betriebsart wird die Netzfrequenz konstant auf die Nennfrequenz geregelt.

### Frequenzregelung mit Statik

In dieser Betriebsart wird die Netzfrequenz entsprechend einer Kurve geregelt. Die Kurve richtet sich nach der Generatorleistung. Die Sollwerte sind im allgemeinen so eingestellt, dass die Nennfrequenz (60 oder 50 Hz) mit 70...80% Leistung erreicht wird. Die Leerlauffrequenz liegt ca. 2 Hz höher.

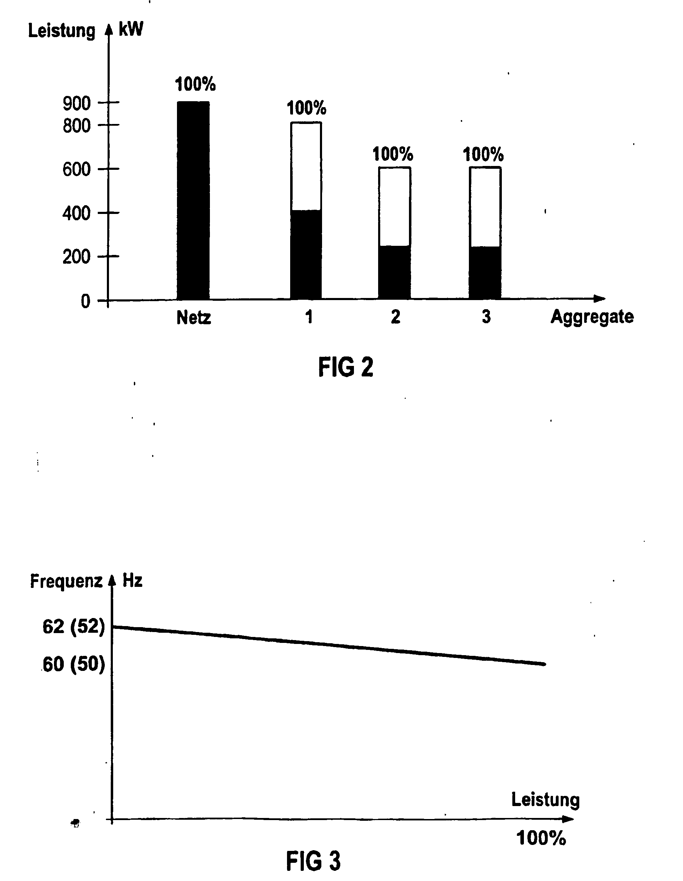

Der Verlauf der Netzfrequenz bei Laständerungen im Netz (Frequenzregelung mit Statik) ist in Fig 3 dargestellt.

### 8.6 Generatorschalter-Oberwachung

### 8.6.1 Generatorschalter "EIN"-Überwachung

Die "Ein"-Rückmeldung des Generatorschalters wird überwacht. Erscheint die Rückmeldung nicht innerhalb einer einstellbaren Zeit nach dem "EIN"-Befehl, so wird die SM
- "RÜCKMELDUNG GEN.SCH. EIN GESTÖRT"
ausgegeben.

### 8.6.2 Generatorschalter "AUS"-Überwachung

Die "Aus"-Rückmeldung des Generatorschalters wird überwacht. Erscheint die Rückmeldung nicht innerhalb einer einstellbaren Zeit nach dem "Aus"-Befehl, so wird die SM
- "RÜCKMELDUNG GEN.SCH. AUS GESTÖRT"
ausgegeben.

### 8.6.3 Generatorschalter "EIN/AUS"-Überwachung

Die "Ein"- und die "Aus"-Rückmeldungen des Generatorschalters werden auf Plausibilität überwacht. Fehlen beide Rückmeldungen oder sind beide vorhanden, so wird nach einer einstellbaren Zeit die SM
- "RÜCKMELDUNG GEN.SCH. EIN/AUS GESTÖRT"
ausgegeben.

### 8.7 Zweiter Zusetzbefehl

Bei bestimmten Bordnetzverhältnissen kann es sinnvoll sein, im Falle einer Störung, zwei neue Aggregate zuzusetzen. Dieses kann eingestellt werden bei:
- Blackout
- Shutdown eines Aggregates

Von dem gestörten Aggregat werden in diesem Falle zwei Zusetzbefehle ausgegeben.

Im Falle eines Startfehlers eines der zuzusetzenden Aggregate wird ein weiterer Zusetzbefehl an ein eventuell vorhandenes drittes Aggregat ausgegeben.

### 9 Generatorschutz- und Synchronisiergerät GENOP 71

Das Generatorschutz- und Synchronisiergerät GENOP 71 realisiert den Generatorschutz mit den Funktionen:
- Kurzschlusserfassung
- Überwachung auf Überstrom in jeder Phase
- Überwachung auf Rückleistung
- Abschaltung unwichtiger Verbraucher
- Automatische Synchronisierung des Generators auf die Sammelschiene
- Erfassung, Aufbereitung und Transfer unterschiedlicher Messwerte über den Profibus

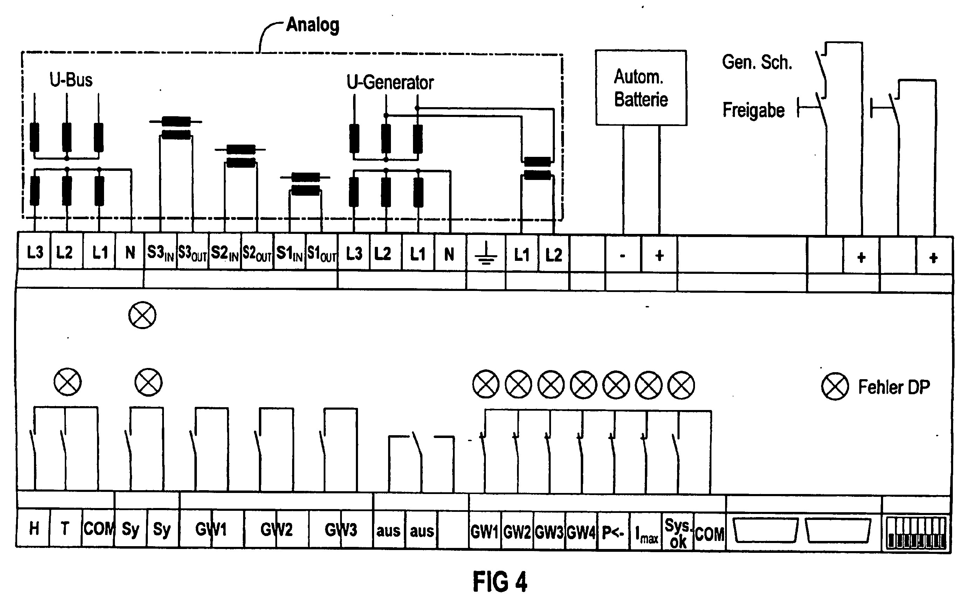

### 9.1 Fig 4 zeigt die Anschlüsse des GENOP 71

### 9.2 Genop integrier im PMA 71 System

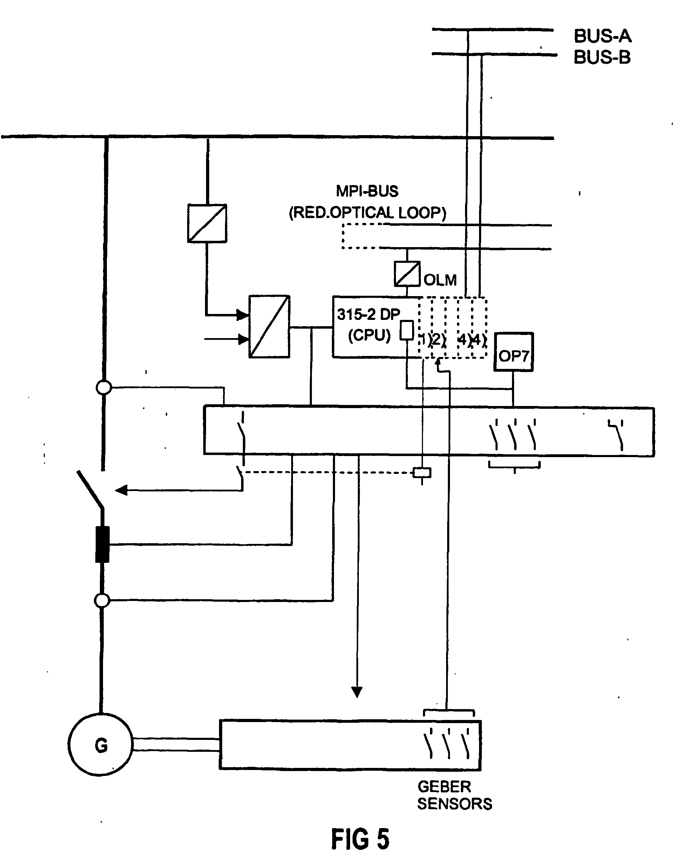

Fig 5 zeigt das Genop 71 integriert ins PMA 71 System. Die Kommunikation zwischen dem Genop und der Simatic-S7 findet über den Profibus-DP statt. Die Parameter für Synchronisierung und Generatorschutz können über das Bedientableau OP7 geändert werden.

Mehr Infos über Bedienung siehe Abschnitt 13.

### 9.3 Genop 71 als Einzelgerät

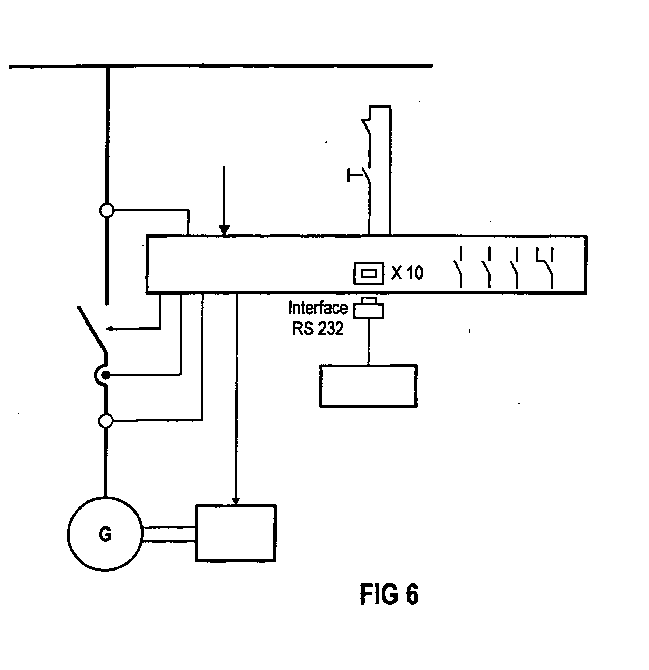

Das Genop 71 kann auch als Einzelgerät eingesetzt werden, wie in Fig 6 gezeigt.

Die Parameter über Synchronisierung und Generatorschutz können über eine serielle Schnittstelle geändert werden. (RS 232)

### 9.4 Test des Gerätes

Das Gerät sollte einmal im Jahr auf korrekte Funktion getestet werden. Ist die Generatorsteuerung nach den Standardschaltplänen aufgebaut, so ist ein Teststecker zum Testen des Generatorschutzes vorhanden.

In den Teststecker wird das Kabel vom Prüfgerät gesteckt. Am Prüfgerät leuchtet jetzt für jede Phase eine Lampe auf. Hinter den Lampen befindet sich je eine Sicherung, mit der das Prüfgerät abgesichert ist.

In jeder Phase kann sekundärseitig ein Strom von 1A oder 5A vorgewählt und am Drehknopf eingestellt werden. Das Instrument wird dabei mit umgeschaltet. Der Strom ist an der entsprechenden Skala abzulesen. Die Richtung des Stromes wird an einem zweiten Schalter eingestellt In Stellung "Normal" wird die Stromrichtung vom Generator ins Netz und in der Stellung "Reverse", die Richtung Netz in den Generator simuliert. Das Amperemeter in der Schaltanlage arbeitet dabei mit, wenn der Amperemeter Umschalter in die richtige Stellung geschaltet wird.

Durch Erhöhen des Stromes in jeder Phase kann jetzt für jede Phase der Auslösepunkt für den Abwurf der unwichtigen Verbraucher und Abschaltung des Schalters durch Überstrom angefahren werden.

Bei der Überprüfung der Leistungseinstellwerte ist darauf zu achten, dass die Ströme in den einzelnen Phasen gleichmäßig erhöht werden um eine Falschauslösung durch einen eventuell zu hoch eingestellten Strom zu vermeiden.

### 9.5 Parametrierung über PC

Ist das Genop als Einzelgerät aufgebaut, so werden die Einstellungen mittels eines PC's vorgenommen. Das Verbindungskabel zum PC wird auf die Serielle Schnittstelle gesteckt. Durch Mausclick auf die Ikone "Genop 71" wird das Parametrierprogramm gestartet.

### Das Standardmenü wird angezeigt

### Load

Das gespeicherte setup eines Genop kann in das Parametrierprogramm geladen werden. Durch das Laden werden die Parameter nicht automatisch in das Genop 71 übertragen.

### Save

Speichert die aktuell editierten Daten aus dem Parametrierprogramm ab. Sind die Daten vorher noch nicht abgespeichert worden, so wird vorher nach einem File-Namen gefragt. Die Erweiterung ist immer "Gen".

### Save As

Hier kann vor dem Abspeichern eines Parametersatzes ein Pfad und ein File-Name eingegeben werden.

### Transmit Data

Überträgt alle im Parametrierprogramm eingestellten Parameter-Werte zum Genop 71.

### Receive Data

Lädt alle aktuell im Genop 71 vorhandenen Parameter in das Parametrierprogramm.

### Print

Alle im Parametrierprogramm enthaltenen Werte werden ausgedruckt.

### Exit

Beendet nach Rückfrage das Parametrierprogramm
9.5.1 Edit

Limit-Values + Delay -Times

| **Parameter** | **Bedeutung** |
|---|---|
| Current 1 | Grenzwert Generatorstrom: Bei Überschreitung des Grenzwertes erfolgt stufig zeitverzögert die Abschaltung der unwichtigen Verbraucher Stufe 1-3 |
| Current 2 | Grenzwert Generatorstrom: (Nicht benutzt) |
| Current 3 | Grenzwert Generatorstrom: Bei Überschreitung des Grenzwertes erfolgt kurzzeitverzögert (1s)die Abschaltung der unwichtigen Verbraucher Stufe 1-3 |
| Current 4 | Grenzwert Generatorstrom: Bei Überschreitung des Grenzwertes erfolgt zeitverzögert (Standard 15 Sek.) die Abschaltung des Generatorschalters |
| Reverse Power | Grenzwert Rückleistung: Bei Überschreitung des Grenzwertes erfolgt zeitverzögert (Standard 6 Sek.) die Abschaltung des Generatorschalters |
| Short Circuit | Kurzschluss: Bei Überschreitung erfolgt kurzzeitverzögert (0.2-0.6 Sek.) die Abschaltung des Generatorschalters |
| Delay Time 1 (Current 1) | Die Verzögerungszeit startet nach Überschreitung des Grenzwertes "Current 1" und schaltet nach Ablauf die unwichtigen Verbraucher Stufe 1 ab. |
| Delay Time 2 (Current 1) | Die Verzögerungszeit startet nach Überschreitung des Grenzwertes "Current 1" und schaltet nach Ablauf die unwichtigen Verbraucher Stufe 2 ab. |
| Delay Time 3 (Current 1) | Die Verzögerungszeit startet nach Überschreitung des Grenzwertes "Current 1" und schaltet nach Ablauf die unwichtigen Verbraucher Stufe 3 ab. |
| Delay Time 3.1 (Current 3) | Die Verzögerungszeit startet nach Überschreitung des Grenzwertes "Current 3" und schaltet nach Ablauf die unwichtigen Verbraucher Stufe 1-3 ab. |
| Delay Time 4 (Current 4) | Die Verzögerungszeit startet nach Überschreitung des Grenzwertes "Dela Time 4" und schaltet nach Ablauf den Generatorschalter aus |
| Delay Time 5 (Reverse Power) | Die Verzögerungszeit startet nach Überschreitung des Grenzwertes "Dela Time 5" und schaltet nach Ablauf den Generatorschalter aus |
| Delay Time 6 (Short Circuit) | Die Verzögerungszeit startet nach Überschreitung des Grenzwertes "Dela Time 6" und schaltet nach Ablauf den Generatorschalter aus |

### Internal Parameters

| **Parameter** | **Bedeutung** |
|---|---|
| **Limits** | |
| Sync.Short-Impulse Lenght | Kurzimpulslänge Synchronisierung |
| Short-Impulse Pulse Ratio | Faktor zur Einstellung des Verhältnisses zwischen Puls/Pausenzeit der Kurzimpulse zur Synchronisierung. Bei Einstellung 100% ist die Puls/Pausenzeit gleich. Bei Einstellung 50% ist die Pausenzeit 50% der Pulszeit. |
| Sync.Long-Impulse Lenght | Langimpulslänge Synchronisierung |
| Long-Impulse Pulse Ratio | Faktor zur Einstellung des Verhältnisses zwischen Puls/Pausenzeit der Kurzimpulse zur Synchronisierung. Bei Einstellung 100% ist die Puls/Pausenzeit gleich. Bei Einstellung 50% ist die Pausenzeit 50% der Pulszeit. |
| Frequ.Limit Switching from Permanent to Long Impulse Lenght | Grenzwert Umschaltung von Dauer auf Langimpuls |
| Frequ.Limit Switching from Long to Short Impulse Lenght | Grenzwert Umschaltung von Langimpuls auf Kurzimpuls |

### Sync.Enable Limits

| **Parameter** | **Bedeutung** |
|---|---|
| **Limits** | |
| Sync.Diff.Frequency Limit | Differenz zwischen Generator- und Netzfrequenz. Ist der Grenzwert überschritten, so werden die Verstellimpulse gesperrt. |
| Sync.Diff.Voltage Limit | Spannungsdifferenz zwischen Generatorspannung und Netzspannung. Ist der Grenzwert überschritten so wird die Zuschaltung des Generatorschalters sowie die Ausgabe von Verstellimpulsen gesperrt |
| Sync.Connecting Limit | Differenz zwischen Generator- und Netzfrequenz wo eine Synchronisierung überhaupt noch möglich ist. Ist der Grenzwert überschritten, so wird die Einschaltung des Generatorschalters gesperrt. Es werden jedoch noch Verstellimpulse zum Frequenzabgleich ausgegeben |
| Pre-Switching Time | Errechnete Zeit zwischen Ausgabe des Generatoreinschaltbefehls und dem Nulldurchgang der Schwebespannung |
| Switch ON Impuls Lenght | Länge des Generatoreinschaltimpulses |

### U+I Transformation

| **Parameter** | **Bedeutung** |
|---|---|
| | |
| Primary Voltage Transformer | Nennspannung des Netzes |
| Primary Current Transformer | Nennstrom des Generators |

### 9.5.2 Extras

### Trigger controlling

Für die Aktivierung dieser Funktion muss ein Genop 71 angeschlossen sein.

In diesem Menü lassen sich die Grenzwertauslösungen für Current 1-4, Rückleistung und Kurzschluss unterdrücken.

### Generator Frequ.

Die Generatorfrequenz kann hier per Mausclick verstellt werden.

Voraussetzung:
- Die Spannungsdifferenz (Netz/Generator) ist kleiner als der in "Sync.Diff.Voltage Limit" eingestellte Wert.
- Die Frequenzdifferenz (Netz/Generator) ist kleiner als der in
- "Sync.Diff.Frequency Limit" eingestellte Wert.

### PC-Interface

Die Nummer der seriellen Schnittstelle (COM Poert 1-3) kann eingestellt werden.

### About GENOP 71

Dieser Menüpunkt zeigt die Versionsdaten des Parameterprogramms und der Firmware eines angeschlossenen Genop 71 an.

Die Menüs "Show Data", "Control-Signals" und "Adjustments" sind nur für Arbeiten im Herstellerwerk vorgesehen.

### 9.6 Generatorschutz

### 9.6.1 Überstrom-Zeitschutz

Die drei Generatorströme IL1, IL2, IL3 werden über Messumformer erfasst. Die Extremwerte der drei Ströme werden auf Grenzwerte überwacht

Die Funktion des Generatorschutzes zeigt folgende Tabelle:

### Generatorstrom

| Grenzwert (GW) | I in % | Verz.Zeit Sek. | Relais GW1 | Relais GW2 | Relais GW3 | Relais Gen.Sch Aus |
|---|---|---|---|---|---|---|
| GW1 | 100 | 5 S | x | | | |
| | | 10 S | | x | | |
| | | 15 S | | | x | |
| GW3 | 120 | 1 S | x | x | x | |
| GW4 | 110 | 30 S | | | | x |

### Rückleistung

| Grenzwert | Pin % | Verz.Zeit Sek. | Relais GW1 | Relais GW2 | Relais GW3 | Relais Gen.Sch Aus |
|---|---|---|---|---|---|---|
| GW5 | 0-100 | 6 S | | | | x |

### Kurzschluss

| Grenzwert | I in % | Verz.Zeit S | Relais GW1 | Relais GW2 | Relais GW3 | Relais Gen.Sch Aus |
|---|---|---|---|---|---|---|
| GW6 | >300 | 0.1- 1.5 Sek | | | | x |

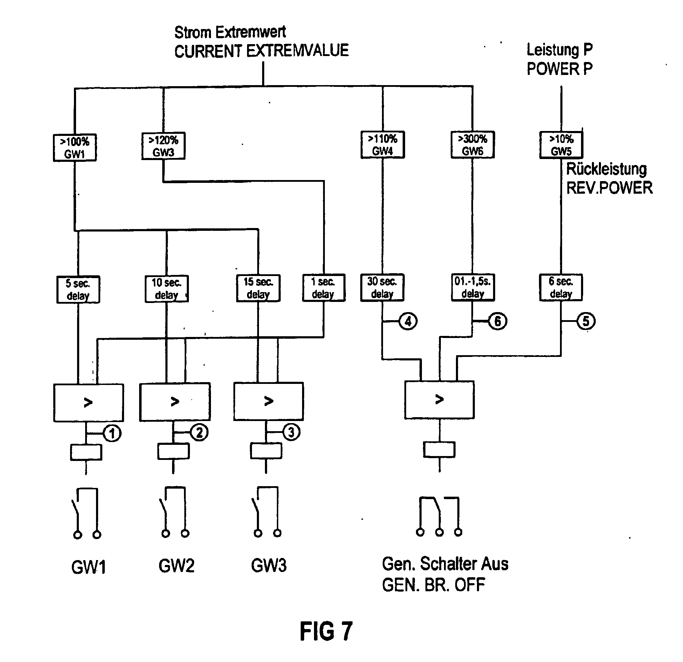

### 9.6.2 Der funktionelle Zusammenhang beim Generatorschutz ist in Fig 7 dargestellt

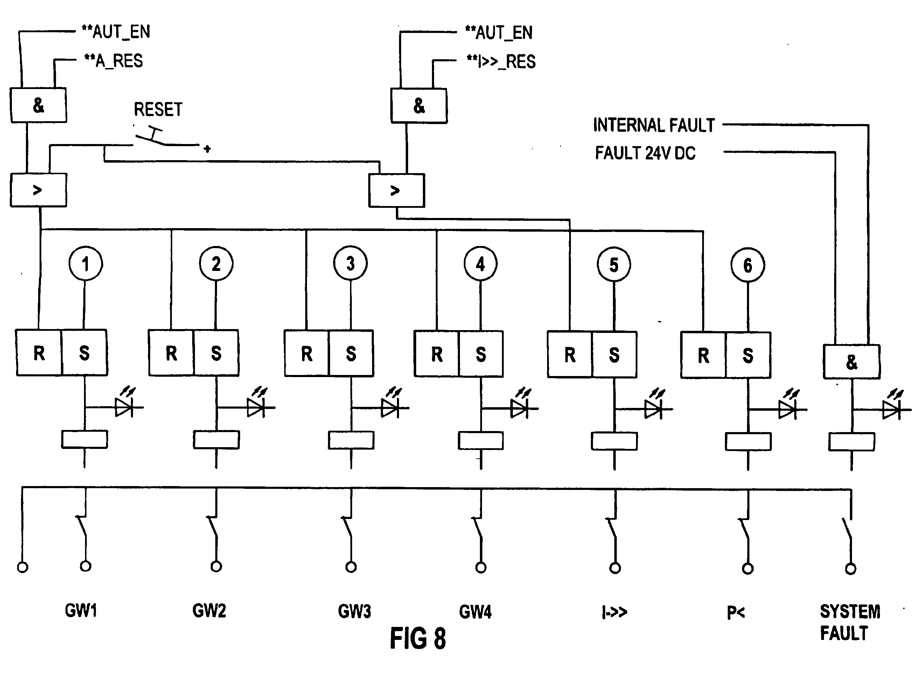

### 9.6.3 Der funktionelle Zusammenhang bei der Störauswertung ist in Fig 8 dargestellt

Die beim Generatorschutz aufgetretenen Stör-Meldesignale werden solange gehalten, bis sie von der übergeordneten Steuerung quittiert oder durch einen RESET aufgehoben werden. Der Ausfall der 24V Batterie-Spannung oder eine Störung im Rechner bewirken eine unbedingte Meldung durch Abfallen des Relais "System Störung".

### 9.7 Synchronisierung

### 9.7.1 Frequenzabgleich

Nach dem Starten des Aggregates wird es zunächst mit Dauerverstellbefehl und danach mit Lang- und Kurzimpulsen an die Netzfrequenz herangeführt Der Vergleich, ob die Netzfrequenz größer oder kleiner als die Generatorfrequenz ist, wird auf dem Generatorschutz- und Synchronisiergerät GENOP 71 durchgeführt.

Ist f-Gen. < als f-Netz erscheint Signal "1" am Ausgang "HÖHER".

Ist f-Gen. > als f-Netz erscheint Signal "1" am Ausgang "TIEFER".

Die Länge der HÖHER/TIEFER Verstellimpulse kann am Bedientableau geändert werden.

### 9.7.2 Schwebungsspannungserfassung und Auswertung

Zur Synchronisierung des Generatorschalters wird die vom Synchronisiergerät gewonnene Schwebespannung ausgewertet. Die Schwebespannung wird durch Vergleich der Netz- und der Generatorspannung erzeugt. Entsprechend der Differenz f-Gen. und f-Netz ändert sich auch die Steilheit der Schwebespannung. Die aus den Messwerten gewonnene Steilheit der Schwebespannungskurve wird ausgewertet und der Einschaltbefehl mit dem entsprechenden Vorhalt erteilt.

### 9.7.3 Vorhalt

Die Vorhaltzeit (Zeit zwischen dem Einschaltbefehl und dem Schließen des Generatorschalters) ist entsprechend den Daten des Generatorschalters am Bedientableau einzustellen.

Die folgende Tabelle zeigt die erlaubten Vorhaltezeiten im Verhältnis der Generatorfrequenz zur Sammelschienenfrequenz.

| Generator/Sammelschiene n Differenzfrequenz [HZ] | Vorhaltzeit Max. [msec] |
|---|---|
| 0.2 | 456 |
| 0.3 | 276 |
| 0.4 | 192 |
| 0.5 | 204 |
| 0.6 | 146 |
| 0.7 | 128 |
| 0.8 | 88 |
| 0.9 | 60 |
| 1.0 | 58 |

### 9.7.4 Differenzfrequenz

Die Differenzfrequenz zwischen Netz- und Generatorfrequenz wird ebenfalls von der Schwebespannung abgeleitet Bei einer Differenzfrequenz von > 0,5 Hz wird die Synchronisierung gesperrt. Bei einer Differenzfrequenz von > 10 Hz werden die HÖHER/TIEFER-Verstellimpulse ganz gesperrt, da hier nur eine Störung des Aggregates vorliegen kann.

### 9.7.5 Frequenzverstimmung

Wird die Generatorfrequenz durch einen Versteilbefehl sehr dicht an die Netzfrequenz herangeführt, so dass eine Dauerschwebung entsteht (Netz und Generatorfrequenz ist gleich), so wird ein Verstellimpuls gegeben und ein größeres Delta-f erzeugt, um eine schnelle Synchronisierung zu ermöglichen. Hierzu werden die Nulldurchgänge der Schwebung ausgewertet. Tritt nicht innerhalb einer bestimmten Zeit ein Nulldurchgang der Schwebung auf, so wird nochmals ein Verstellimpuls gegeben.

Automatische Synchronisierung/Synchronisierung im Local Semiautomatikbetrieb und Synchronisierung im Handbetrieb sind im Abschnitt 4 beschrieben.

### 9.7.6 Einstellbare Werte für die Synchronisierung

Einige Werte für die Synchronisierung können über das OP7 eingestellt werden. Wird das Generatorschutzgerät/Messumformer GENOP 71 allein eingesetzt, können diese Werte über ein PC-Programm eingestellt werden.

Folgende Werte sind einstellbar.
- Grenzwert der Differenzfrequenz für die Freigabe der Verstellimpulse (z.B. 10 Hz)
- Grenzwert der Differenzfrequenz für die Umschaltung von Dauer- auf Langimpuls (z.B. 1,5 Hz)
- Grenzwert der Differenzfrequenz für die Umschaltung von Lang- auf Kurzimpuls (z.B. 0,6 Hz)
- Grenzwert der Differenzfrequenz für die Einschaltung des Generatorschalters bei Nulldurchgang (z.B. 0,5 Hz)
- Impulslänge der Kurzimpulse
- Impulslänge der Langimpulse
- Vorhaltzeit vor Erreichen des Nulldurchganges der Schwebespannung (Einschaltzeit des Generatorschalters)
- Impulslänge des Einschaltbefehls des Generatorschalters
- Verzögerungszeit zum Auslösen der Frequenzverstimmung
- Impulslänge der "Höher/Tiefer"-Impulse für Frequenzverstimmung
- Grenzwert der Differenz zwischen Generatorspannung und Netzspannung zum Sperren der Verstellung und des Zuschaltens des Generatorschalters

### 9.7.7 Spannungsdifferenzüberwachung

Das Zuschalten des Generatorschalters bei zu großer Spannungsdifferenz wird blockiert. Liegt die Spannungsdifferenz über einem einzustellenden Grenzwert, so wird die Zuschaltung des Generatorschalters sowie die Ausgabe der Verstellimpulse gesperrt. Die Überschreitung des Grenzwertes wird mit einer LED an der Frontseite des Gerätes signalisiert.

Optionel kann ein Spannungsregler in der Simatic-S7 vorgesehen werden der höher/tiefer Verstellimpulse an den Spannungsregler des Generators ausgibt.

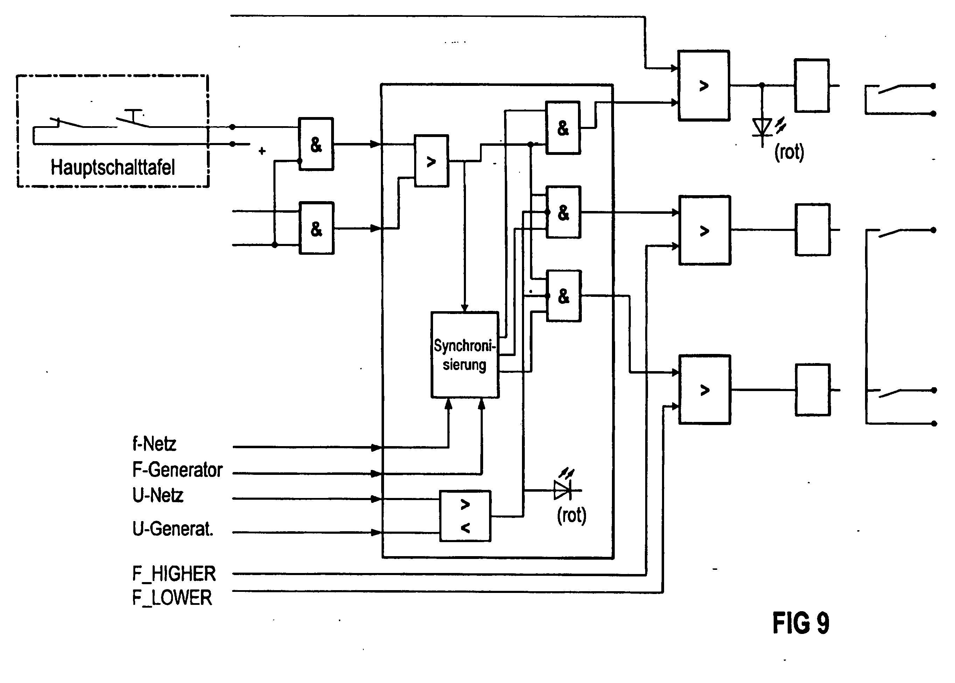

### 9.7.8 Die Funktionsabläufe bei der Synchronisierung zeigt Fig 9

### Bedeutung der Parameter:

| | |
|---|---|
| BR_ON | Schalter EIN-Signal |
| SYN_EN | Freigabe Synchronisieren |
| AUT_EN | Automatikbetrieb |
| F_HIGHER | Frequenzverstellimpuls Höher |
| F_LOWER | Frequenzverstellimpuls Tiefer |

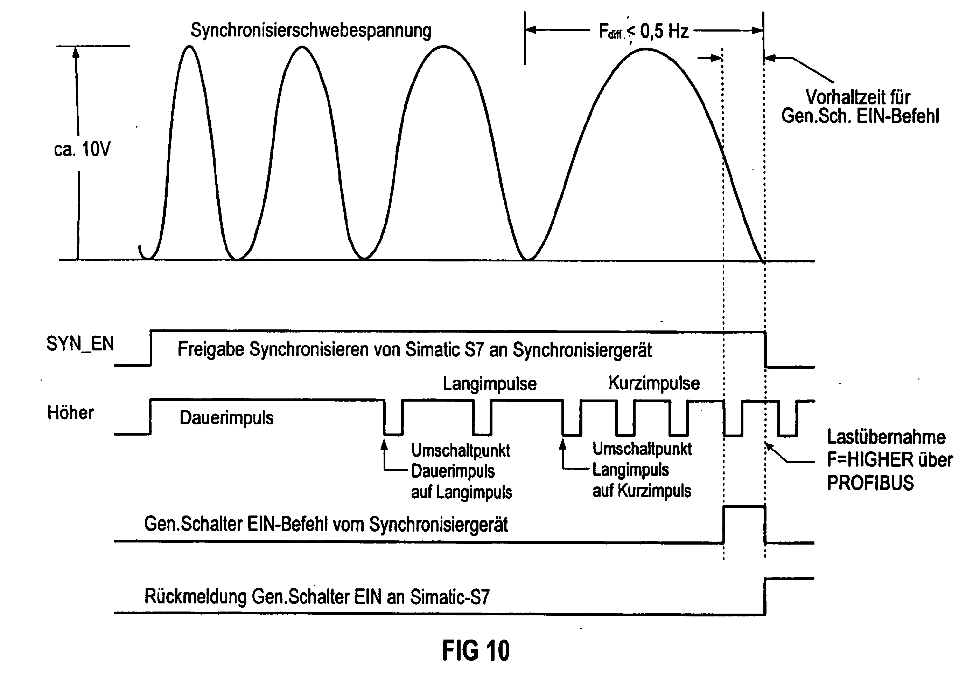

### 9.7.9 Das Prinzip der Synchronisierung ist in Fig 10 dargestellt

### 10 Trennwandler DC 24V / DC 24V

### 10.1 Aufgabe

Der Trennwandler DC 24V / DC 24V hat folgende Funktionen:
1.) Die angeschlossenen Komponenten können über einen größeren Spannungsbereich betrieben werden, als nach den technischen Daten der einzelnen Komponenten möglich.
2.) Die angeschlossenen Komponenten werden von der Schiffsbatterie potentialmäßig entkoppelt. Hinter dem Trennwandler kann die DC 24V-Versorgungsspannung geerdet werden, was für den Störschutz große Vorteile bietet.

Folgende Komponenten werden von der Stromversorgung eingespeist:
- die zum Aggregat gehörende SIMATIC S7
- sämtliche zum Aggregat und zur Steuerung gehörende Signalgeber
- die digitalen Ausgaben der SIMATIC S7 (Ansteuerung von Lampen oder Koppelrelais)
- das Generatorschutzgerät/Messumformer
- das Bedientableau OP7

Die Stromversorgung des Generatorschutzgerätes/Messumformers ist redundant aufgebaut, d.h. dieses Gerät verfügt neben der Einspeisung vom Trennwandler (und somit von der übergeordneten Batteriestromversorgung) über eine Einspeisung von einem Netzteil, das vom jeweiligen Generator gespeist wird.

Die Spannungsversorgung für die Unterspannungsspule des Generatorschalters nebst Verzögerungsgerät ist in der PMA 71 nicht enthalten, sondern ist in der Schalttafel aufzubauen.

### 10.2 Mechanischer Aufbau:

Der Trennwandler DC 24V / DC 24V wird mit einigen Schrauben auf der Montageplatte befestigt. Er kann senkrecht oder waagerecht montiert werden. Der Anschluss der Ein- und Ausgangsspannung erfolgt über Fastonstifte.

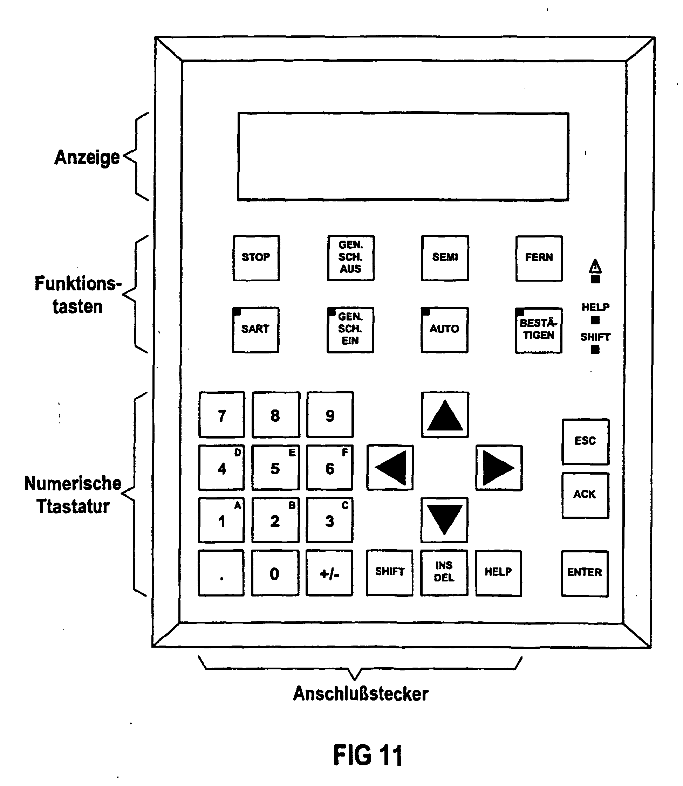

11 Fig 11 zeigt das Standard-Bedientableau (BT) OP7

## Patentansprüche

1. Schiffs-Elektrosystem mit über digitale Standardmodule steuerbaren und regelbaren Systemkomponenten in Form von Generatoren, elektrischen Verbrauchern wie Elektromotoren und einem Bordnetz mit Schaltanlagen etc., wobei das Elektrosystem bei allen Betriebszuständen des Schiffes für eine Bereitstellung ausreichender elektrischer Energie sorgt, **dadurch gekennzeichnet, dass** die Systemkomponenten bei allen Betriebszuständen durch digitalarbeitende Standardmodule gesteuert und geregelt werden, wobei jedes der Standardmodule jeweils nur zur Steuerung und Regelung jeweils einer der Systemkomponenten vorgesehen ist.

2. Schiffs- Elektrosystem nach Anspruch 1, **dadurch gekennzeichnet, dass** die jeweiligen, zur Steuerung und Regelung jeweils einer der Systemkomponenten vorgesehenen digitalarbeitenden Standardmodule über ein Bussystem verbunden sind, das als Profibus (Prozess Field Bus)-System ausgebildet ist.

3. Schiffs- Elektrosystem nach Anspruch 1 oder 2, **dadurch gekennzeichnet, dass** es speicherprogrammierbare Steuerungen (Programmable Controllers), insbesondere vom Typ Siemens SIMATIC S7 aufweist.

4. Schiffs-Elektrosystem nach Anspruch 1, 2 oder 3, **dadurch gekennzeichnet, dass** es durchgängig programmierbar ausgebildet ist, insbesondere in der Programmiersprache Step 7.

5. Schiffs-Elektrosystem nach einem oder mehreren der vorhergehenden Ansprüche, **dadurch gekennzeichnet, dass** es Bedien- und Kontrollgeräte aufweist, die unter Windows laufen.

6. Schiffs-Elektrosystem nach einem oder mehreren der vorhergehenden Ansprüche, **dadurch gekennzeichnet, dass** seine Komponenten Standard-Schalttafeln und/oder Standard-Schaltschränke aufweisen.

7. Schiffs-Elektrosystem nach einem oder mehreren der vorhergehenden Ansprüche, **dadurch gekennzeichnet, dass** es eine Energieerzeuger-Steuerungs-Regelungs- und Schaltungsautomatik aufweist.

8. Schiffs-Elektrosystem nach Anspruch 7, **dadurch gekennzeichnet, dass** die Energieerzeugerautomatik die Energieerzeugung unter wirtschaftlichen Gesichtspunkten optimierend ausgelegt ist (Power Management).

9. Schiffs-Elektrosystem nach einem oder mehreren der vorhergehenden Ansprüche, **dadurch gekennzeichnet, dass** es Generatorschutzfunktionen aufweist.

10. Schiffs-Elektrosystem nach einem oder mehreren der vorhergehenden Ansprüche, **dadurch gekennzeichnet, dass** es Generatorsynchronisierungsgeräte aufweist.

11. Schiffs-Elektrosystem nach einem oder mehreren der vorhergehenden Ansprüche, **dadurch gekennzeichnet, dass** es Bedientableaus zum Bedienen und Beobachten, Messumformer und Trennwandler aufweist.

12. Schiffs-Elektrosystem nach einem oder mehreren der vorhergehenden Ansprüche, **dadurch gekennzeichnet, dass** es derart ausgebildet ist, dass eine Betriebsartenwahl für einen Einzel- oder Gruppenbetrieb der Generatoren möglich ist.

## Claims

1. Marine electrical system having system components, which can be controlled and regulated by digital standard modules, in the form of generators, electrical loads such as electric motors and an on-board power supply system with switchgear assemblies etc., with the electrical system ensuring that adequate electrical power is provided in all operating states of the ship, **characterized in that** the system components are controlled and regulated by standard modules which operate digitally in all operating states, with each of the standard modules each being provided only for controlling and regulating in each case one of the system components.

2. Marine electrical system according to Claim 1, **characterized in that**, the respective standard modules which operate digitally and are provided for controlling and regulating in each case one of the system components are connected via a bus system which is in the form of a Profibus (Process Field Bus) system.

3. Marine electrical system according to Claim 1 or 2, **characterized in that** the marine electrical system has programmable logic controllers, in particular of the Siemens SIMATIC S7 type.

4. Marine electrical system according to Claim 1, 2 or 3, **characterized in that** the marine electrical system can be programmed at any time, in particular using the programming language Step 7.

5. Marine electrical system according to one or more of the preceding claims, **characterized in that** the marine electrical system has control and monitoring devices which run using Windows.

6. Marine electrical system according to one or more of the preceding claims, **characterized in that** the components of this marine electrical system have standard switch panels and/or standard switchgear cabinets.

7. Marine electrical system according to one or more of the preceding claims, **characterized in that** the marine electrical system has a power generator/ control/regulation and switching automatic system.

8. Marine electrical system according to Claim 7, **characterized in that** the power generator automatic system is designed to optimize the power generation on a financial basis (power management).

9. Marine electrical system according to one or more of the preceding claims, **characterized in that** the marine electrical system has generator protection functions.

10. Marine electrical system according to one or more of the preceding claims, **characterized in that** the marine electrical system has generator synchronization devices.

11. Marine electrical system according to one or more of the preceding claims, **characterized in that** the marine electrical system has control panels for control and observation, measurement transducers and isolating transformers.

12. Marine electrical system according to one or more of the preceding claims, **characterized in that** the marine electrical system is designed such that a choice of operating modes is possible for individual operation or group operation of the generators.

## Revendications

1. Système électrique pour bateau comprenant des composants de système qui peuvent être commandés et régulés par l'intermédiaire de modules standards numériques et qui se présentent sous forme de générateurs, consommateurs électriques tels que des moteurs électriques et un réseau de bord qui comporte des installations de distribution, etc., le système électrique assurant une alimentation en énergie électrique suffisante pour une mise à disposition dans tous les états de fonctionnement du bateau, **caractérisé par le fait que** les composants de système sont commandés et régulés dans tous les états de fonctionnement par l'intermédiaire de modules standards numériques, chacun des modules standards n'étant prévu respectivement que pour la commande et la régulation de l'un des composants de système.

2. Système électrique pour bateau selon la revendication 1, **caractérisé par le fait que** les modules standards numériques respectifs, prévus pour la commande et la régulation chacun d'un des composants de système, sont reliés par l'intermédiaire d'un système de bus qui est conçu comme un système Profibus (Process Field Bus).

3. Système électrique pour bateau selon la revendication 1 ou 2, **caractérisé par le fait qu'**il comporte des commandes par programme enregistré (Programmable Controllers), notamment du type Siemens SIMATIC S7.

4. Système électrique pour bateau selon la revendication 1, 2 ou 3, **caractérisé par le fait qu'**il est conçu avec une possibilité de programmation courante, notamment dans le langage de programmation Step 7.

5. Système électrique pour bateau selon l'une ou plusieurs des revendications précédentes, **caractérisé par le fait qu'**il comporte des appareils de commande et de contrôle qui fonctionnent sous Windows.

6. Système électrique pour bateau selon l'une ou plusieurs des revendications précédentes, **caractérisé par le fait que** ses composants comportent des tableaux de distribution standards et/ou des armoires de distribution standards.

7. Système électrique pour bateau selon l'une ou plusieurs des revendications précédentes, **caractérisé par le fait qu'**il comporte un dispositif automatique de production, commande, régulation et distribution d'énergie.

8. Système électrique pour bateau selon la revendication 7, **caractérisé par le fait que** le dispositif automatique de production d'énergie est conçu pour la production d'énergie optimisée du point de vue de la productivité (Power Management).

9. Système électrique pour bateau selon l'une ou plusieurs des revendications précédentes, **caractérisé par le fait qu'**il comporte des fonctions de protection de générateur.

10. Système électrique pour bateau selon l'une ou plusieurs des revendications précédentes, **caractérisé par le fait qu'**il comporte des appareils de synchronisation de générateur.

11. Système électrique pour bateau selon l'une ou plusieurs des revendications précédentes, **caractérisé par le fait qu'**il comporte des tableaux de commande pour la commande et l'observation, des convertisseurs de mesure et des séparateurs.

12. Système électrique pour bateau selon l'une ou plusieurs des revendications précédentes, **caractérisé par le fait qu'**il est conçu de telle sorte qu'un choix de mode de fonctionnement est possible pour un fonctionnement individuel ou groupé des générateurs.
